# EUROPÄISCHE PATENTSCHRIFT

(11) **EP 3 339 906 B1**
(45) Veröffentlichungstag und Bekanntmachung des Hinweises auf die Patenterteilung: **29.03.2023**
(21) Anmeldenummer: 16206148.5
(22) Anmeldetag: 22.12.2016
(51) Int. Cl.: G01S 19/39, G07B 15/06

(54) **VERFAHREN, SYSTEM, VORRICHTUNG UND COMPUTERPROGRAMMPRODUKT ZUR SIGNALISIERUNG EINER DROHENDEN MANGELNDEN BETRIEBSFÄHIGKEIT EINER POSITIONSBESTIMMUNGSVORRICHTUNG, SOWIE GEBÜHRENERHEBUNGSSYSTEM**
METHOD, SYSTEM, DEVICE AND COMPUTER PROGRAM PRODUCT FOR SIGNALLING AN IMPENDING LACK OF OPERABILITY OF A POSITION DETECTING APPARATUS, AND FEE CHARGING SYSTEM
PROCÉDÉ, SYSTÈME, DISPOSITIF ET PRODUIT-PROGRAMME INFORMATIQUE DE SIGNALISATION D'UNE CAPACITÉ DE FONCTIONNEMENT DÉFAILLANTE IMMINENTE D'UN DISPOSITIF DE DÉTERMINATION DE POSITION, ET SYSTÈME DE PÉAGE

(43) Veröffentlichungstag der Anmeldung: 27.06.2018
(73) Patentinhaber: Toll Collect GmbH, 10785 Berlin (DE)
(72) Erfinder: Böhme, Nils, 14471 Potsdam (DE); Slizewski, Zbigniew, 10829 Berlin (DE)
(74) Vertreter: adares Patent- und Rechtsanwälte Reininger & Partner GmbB

(56) Entgegenhaltungen:
- EP-A1- 2 924 662
- EP-A1- 3 002 734
- EP-A2- 1 048 959
- EP-B1- 2 487 506
- WO-A1-2013/152378
- CN-A- 103 777 215
- CN-B- 103 116 168
- JP-B2- 3 775 033
- US-A1- 2004 210 384

## Beschreibung

Die Erfindung betrifft ein Verfahren zur Signalisierung einer drohenden mangelnden Betriebsfähigkeit einer Positionsbestimmungsvorrichtung sowie ein zugehöriges Signalisierungssystem, ein Gebührenerhebungssystem, eine Positionsbestimmungsvorrichtung und ein Computerprogrammprodukt.

Eine Positionsbestimmungsvorrichtung bildet die zentrale Komponente sowohl eines Navigationssystems, als auch eines elektronischen Mautsystems. Bei letzterem handelt es sich um ein Gebührenerhebungssystem, welches die von einem Fahrzeug benutzten Straßen oder andere Verkehrsstrukturen wie Brücken und Tunnel bzw. die durch das Fahrzeug auf diesen Strukturen zurückgelegten Strecken ermittelt und darauf basierend dem Fahrzeughalter eine entsprechende Mautrechnung zukommen lässt.

Eine satellitengestützte Positionsbestimmungsvorrichtung ermittelt Positionen eines Fahrzeuges mittels eines globalen Navigationssatellitensystems (GNSS), welches durch eine Vielzahl an Navigationssatelliten gebildet wird, die jeweils fortlaufend ein Signal aussenden. Mittels eines GNSS-Empfängers werden Signale mehrerer der Navigationssatelliten empfangen und ausgewertet, um daraus die genaue Position zu berechnen. Für die Bestimmung eine Position von einer bekannten Höhe über oder auf der Erdoberfläche reichen Signale von drei Satelliten aus. Signale von 4 Satelliten sind dann notwendig, wenn zusätzlich zur Längen- und Breitenkoordinate einer Position auch die Höhe der Position über der Erdoberfläche bestimmt werden soll. Üblicherweise sind beispielsweise beim GPS-System von jeder Position der Erde aus jederzeit etwa 6-10 Navigationssatelliten "sichtbar".

Eine in einem Fahrzeug installierte Positionsbestimmungsvorrichtung wird auch als On-Board Unit (OBU) oder als Fahrzeuggerät (FzG) bezeichnet. Aufgrund von Materialermüdung, Alterung, fehlerhaftem Einbau, externen Einflüssen und dergleichen, kann die Qualität der Positionsbestimmung im Laufe der Zeit abnehmen. Das zeigt sich im Extremfall dadurch, dass die Positionsbestimmung irgendwann plötzlich nicht mehr durchgeführt werden kann. Es wird dann von einer sogenannten "Nichterkennung" gesprochen. Je nach Konfiguration des FzG wird dem Fahrzeughalter eine einzelne Nichterkennung oder die Häufung solcher Ereignisse gemeldet. Ist die Positionsbestimmungsvorrichtung Teil eines Gebührenerhebungssystems, dann wird der Fahrzeughalter in der Regel aufgefordert, das FzG zeitnah überprüfen zu lassen.

Das Versagen eines FzG ist insbesondere in Zusammenhang mit Gebührenerhebungssystemen ein wichtiges Thema. Es muss sichergestellt werden, dass die Nichterkennung ihre Ursache tatsächlich in einer mangelnden Betriebsfähigkeit des FzG hat, die möglicherweise daran liegt, dass die Satellitensignale gar nicht den GNSS-Empfänger erreichen, beispielsweise wenn sich das Fahrzeug in einem Tunnel befindet. Hierzu wird in EP 2 487 506 B1 vorgeschlagen, bei einem mangelnden GNSS-Empfang zu prüfen, ob auch gleichzeitig der Mobilfunkempfang beeinträchtigt ist. Erst wenn dies nicht der Fall ist, dann liegt ein Fehler im FzG vor. Nachteil eines solchen Systems ist, dass zusätzliche Komponenten eines Mobilfunkempfängers gebraucht werden. Außerdem kann der Fahrzeughalter erst gewarnt werden, wenn das FzG bereits nicht mehr betriebsfähig ist. Er müsste dann sofort reagieren und das FzG zur Untersuchung bzw. Wartung bringen.

EP 1 048 959 A2 beschreibt weiterhin einen GPS-Empfänger mit einem Detektor aufweisend einen Oszillator und mehrere Empfangskanäle, einer Navigationsmeldungsempfangsvorrichtung zum Analysieren einer Meldung aus einem von einem GPS-Satelliten ausgesandten Signal, einer Positionsbestimmungsvorrichtung zum Bestimmen einer Position des Empfängers, einer Satellitenauswahlvorrichtung zum Auswählen eines GPS-Satelliten, einer Stationär-Satelliten-Empfangsvorrichtung zum Empfangen eines Signals eines stationären Satelliten und Messen einer Offset-Frequenz des Oszillators. Dadurch kann der Empfänger die Offset-Frequenz überwachen und vorhersagen.

JP 3 775033 B2 offenbart einen GPS-Empfänger, der ausgebildet ist, Signale eines GPS-Satelliten zu empfangen und Referenz-Korrekturdaten eines von einer Referenzstation ausgesandten GPS-Signals zu empfangen und eine Position unter Verwendung der Referenz-Korrekturdaten zu korrigieren. Dadurch kann ein Versagen eines GPS-Sensors oder FM-Empfängers detektiert werden.

CN 103 777 215 A beschreibt ein Verfahren, bei dem zuerst detektiert wird, ob eine GPS-Positionsbestimmung möglich ist oder nicht, und wenn keine GPS-Positionsbestimmung möglich ist, ob die GPS-Antenne oder das GPS-Signal geschützt sind. Dazu wird ein spezieller Algorithmus eingesetzt.

CN 103 116 168 B beschreibt weiterhin ein Verfahren zur Detektion einer mangelnden Betriebsfähigkeit einer Positionsbestimmungsvorrichtung, bei dem eine von der Positionsbestimmungsvorrichtung ausgegebene Kommunikationsprotokollinformation detektiert wird, bestimmt wird, dass die Positionsbestimmungsvorrichtung anormal ist, wenn die Kommunikationsprotokollinformation anormal ist, und die Betriebsunfähigkeit der Positionsbestimmungsvorrichtung entsprechend einem Zustand der Anomalie und einer Auftrittszeit der Kommunikationsprotokollinformation bearbeitet wird.

WO 2013/152378 A1 beschreibt ein Verfahren, bei dem ein Satellitenempfänger Navigationssignale von einem Navigationssatellitensystem empfängt und eine Feldstärke der Signale überwacht, um Security Attacken auf das Satellitensignal zu detektieren.

Es ist Aufgabe der Erfindung, ein Verfahren bereitzustellen, mit dem eine mangelnde Betriebsfähigkeit einer Positionsbestimmungsvorrichtung mit hoher Sicherheit aber mit geringem zusätzlichen Materialaufwand erkannt werden kann. Wünschenswert ist es zudem, wenn die mangelnde Betriebsfähigkeit bereits vor dem Auftreten des völligen Versagens der Positionsbestimmung signalisiert wird. Es ist weiterhin Aufgabe der Erfindung, zu diesem Zweck ein Signalisierungssystem, ein Gebührenerhebungssystem, eine Positionsbestimmungsvorrichtung und ein Computerprogrammprodukt bereitzustellen.

Die Aufgabe wird gemäß der Erfindung durch ein Verfahren zur Signalisierung einer drohenden mangelnden Betriebsfähigkeit einer Positionsbestimmungsvorrichtung mit den Merkmalen des Anspruchs 1, durch ein Signalisierungssystem mit den Merkmalen des Anspruchs 4, durch ein Gebührenerhebungssystem mit den Merkmalen des Anspruchs 8, durch eine Positionsbestimmungsvorrichtung mit den Merkmalen des Anspruchs 9 und durch ein Computerprogrammprodukt mit den Merkmalen des Anspruchs 10 gelöst. Vorteilhafte Weiterbildungen der Erfindung sind in den Unteransprüchen aufgeführt.

Die Erfindung beruht auf der Erkenntnis, dass sich eine drohende mangelnde Betriebsfähigkeit einer Positionsbestimmungsvorrichtung eine gewisse Zeit im Voraus ankündigt. Das bedeutet, dass aus dem Verhalten der Komponenten der Positionsbestimmungsvorrichtung erkannt werden kann, dass eine zukünftige mangelnde Betriebsfähigkeit droht. Zu dem Zeitpunkt, an dem die drohende mangelnde Betriebsfähigkeit erkannt wird, liegt die mangelnde Betriebsfähigkeit noch nicht vor, so dass die Positionsbestimmungsvorrichtung zu dem Zeitpunkt und noch über einen gewissen Zeitraum danach einwandfrei arbeiten kann. Auf diese Weise kann sich eine drohende mangelnde Betriebsfähigkeit bereits Tage, Wochen oder sogar Monate im Voraus ankündigen. Die Erfinder haben insbesondere erkannt, dass sich eine drohende mangelnde Betriebsfähigkeit der Positionsbestimmungsvorrichtung aus den Fluktuationen der Empfangssignalstärke eines vom GNSS-Empfänger empfangenen GNSS-Signals erkennen lässt.

In der Positionsbestimmungsvorrichtung dient ein GNSS-Empfänger dazu, GNSS-Signale von Navigationssatelliten zu empfangen. Die empfangenen Signale werden dann analysiert, um die Position des GNSS-Empfängers, und somit die Position der Positionsbestimmungsvorrichtung bzw. des Fahrzeuges zu bestimmen, in oder an dem sich die Positionsbestimmungsvorrichtung befindet.

Die GNSS-Signale, oder kurz Signale, der unterschiedlichen Navigationssatelliten werden mit unterschiedlichen Empfangssignalstärken am GNSS-Empfänger empfangen. Diese Empfangssignalstärken hängen stark von der Art, Anordnung und Orientierung der für den GNSS-Empfang eingesetzten Antenne(n) ab, aber auch von der Entfernung des GNSS-Empfängers zu dem das Signal aussendenden Navigationssatelliten. Wenn das GNSS-System jedoch genügend Navigationssatelliten aufweist, welche um die Erdkugel verteilt sind, dann kann davon ausgegangen werden, dass das vom GNSS-Empfänger sichtbare Himmelssegment üblicherweise genügend Navigationssatelliten enthält. Dann lassen sich Empfangssignalstärken des vom GNSS-Empfänger empfangenen GNSS-Signals bestimmen, die über längere Zeiträume hinweg innerhalb eines relativ schmalen Signalstärkebereich liegen, wenn der GNSS-Empfänger einwandfrei funktioniert.

Bei einer solchen Empfangssignalstärke kann es sich beispielsweise um die Empfangssignalstärke des vom GNSS-Empfänger an jedem Zeitpunkt am besten zu empfangenden Satellitensignals handeln. Lassen sich zu einem Zeitpunkt also z.B. Signale von 8 Satelliten so gut empfangen, dass sie für die Positionsbestimmung genutzt werden können, dann kann als Empfangssignalstärke zu dem Zeitpunkt die Empfangssignalstärke des stärksten der 8 empfangenen Satellitensignale angenommen werden. Alternativ kann als maßgebliche Empfangssignalstärke die Empfangssignalstärke eines Satellitensignals angenommen werden, welche innerhalb eines vorgegebenen Signalstärkebereiches liegt. Es ist auch denkbar, dass die Empfangssignalstärken mehrerer oder aller empfangbaren Satellitensignale gemittelt werden, um eine Empfangssignalstärke zu ermitteln. Bei der Empfangssignalstärke kann es sich insbesondere um eine elektrische oder magnetische Feldstärke des am GNSS-Empfänger bzw. an der Antenne ankommenden Satellitensignals handeln.

Bei dem erfindungsgemäßen Verfahren wird eine erste Empfangssignalstärke eines vom GNSS-Empfänger empfangenen GNSS-Signals ermittelt. Ferner wird eine zweite Empfangssignalstärke eines vom GNSS-Empfänger empfangenen GNSS-Signals ermittelt. Das Ermitteln der ersten und der zweiten Empfangssignalstärke kann darin bestehen, dass aus mehreren in einem Speicher hinterlegten Empfangssignalstärken zwei Empfangssignalstärken ausgewählt werden. Diese müssen dann in einem oder mehreren vorhergehenden Schritten mittels des GNSS-Empfängers gemessen worden sein oder aus mittels des GNSS-Empfängers gemessenen Empfangssignalstärken abgeleitet worden sein oder ableiten lassen.

Die ermittelten Empfangssignalstärken werden anschließend ausgewertet. Hierbei kann ein einfacher Vergleich der beiden Empfangssignalstärken mit einem Verdachtsschwellwert und / oder miteinander stattfinden. Es sind jedoch auch kompliziertere Algorithmen zur Auswertung der beiden Empfangssignalstärken denkbar. Es können auch weitere ermittelte Empfangssignalstärken in die Auswertung mit einbezogen werden. Dabei wird ein Ergebnis der Auswertung erzeugt. Das Ergebnis der Auswertung wird anschließend dazu verwendet, eine Entscheidung dahingehend zu treffen, dass eine Signalisierung ausgelöst wird, dass eine mangelnde Betriebsfähigkeit der Positionsbestimmungsvorrichtung droht.

Das Verfahren hat den Vorteil, dass keine weiteren Sensoren notwendig sind, um die Funktionsweise und Betriebsfähigkeit der Positionsbestimmungsvorrichtung zu verifizieren bzw. zu prüfen. Zudem ist es ausreichend, die Satellitensignale lediglich eines GNSS-Systems zu nutzen. Es werden also nicht notwendigerweise mehrere GNSS-Empfänger gebraucht. Die erfindungsgemäße Lösung lässt sich auf alle gängigen GNSS-Systeme anwenden. Bereits etabliert oder in Aufbau befinden sich zurzeit die Systeme Global Positioning System (GPS, auch unter NAVSTAR GPS bekannt), GLONASS, Galileo und Beidou.

Gemäß einer bevorzugten Ausführungsform wird die erste Empfangssignalstärke des vom GNSS-Empfänger empfangenen GNSS-Signals zu einem ersten Empfangszeitpunkt ermittelt. Das bedeutet insbesondere, dass es sich um eine Empfangssignalstärke handelt, die zu dem ersten Empfangszeitpunkt aufgrund des Satellitensignals am GNSS-Empfänger anliegt. Anders ausgedrückt handelt es sich in diesem Fall bei der ersten Empfangssignalstärke um die Signalstärke des GNSS-Signals zu dem ersten Empfangszeitpunkt an dem GNSS-Empfänger. Gemäß einer alternativen Ausführungsform wird die erste Empfangssignalstärke ermittelt, indem mehrere Empfangssignalstärken miteinander verknüpft werden. Beispielsweise kann ein Mittelwert aus zwei oder mehr Empfangssignalstärken berechnet werden, die an mehreren ersten Empfangszeitpunkten ermittelt wurden, beispielsweise gemittelt über die Empfangssignalstärken eines vorgegebenen Zeitabschnittes, insbesondere eines Tages. Dieser Mittelwert dient dann als ermittelte erste Empfangssignalstärke. Alternativ kann auch über mehrere oder über alle innerhalb eines Empfangszeitbereiches am GNSS-Empfänger gemessenen Empfangssignalstärken ein Mittelwert ermittelt werden, der dann als erste Empfangssignalstärke weiter verarbeitet wird.

Bevorzugterweise wird die zweite Empfangssignalstärke des vom GNSS-Empfänger empfangenen GNSS-Signals zu einem zweiten Empfangszeitpunkt ermittelt. Alternativ kann, analog der vorangehend in Zusammenhang mit der ersten Empfangssignalstärke erläuterten Vorgehensweise, die zweite Empfangssignalstärke über mehrere zweite Empfangszeitpunkte oder über einen zweiten Empfangszeitbereich gemittelt werden. Zwischen den beiden Empfangszeitpunkten, zwischen den beiden Empfangszeitbereichen oder zwischen dem ersten oder zweiten Empfangszeitpunkt und dem ersten oder zweiten Empfangszeitbereich liegt ein Zeitabstand, der vorzugsweise zumindest mehrere Minuten oder Stunden beträgt.

Es hat sich insbesondere herausgestellt, dass ein unerwartet großer Sprung in der Empfangssignalstärke, insbesondere ein starker Signalstärkenabfall, von einer Messung zur anderen eine zukünftig zu erwartende mangelnde Betriebsfähigkeit andeuten kann. Gemäß einer nicht beanspruchten Ausführungsform umfasst daher das Auswerten der ersten Empfangssignalstärke und der zweiten Empfangssignalstärke ein Vergleichen der ersten Empfangssignalstärke und/oder der zweiten Empfangssignalstärke mit einem Vergleichswert. Beispielsweise ist der Vergleichswert ein Verdachtsschwellwert (absoluter Schwellwert). Liegt eine erste der Empfangssignalstärken unterhalb des Verdachtsschwellwertes und eine zweite Empfangssignalstärke mehr als ein vorbestimmter Abstandswert von der ersten Empfangssignalstärke oberhalb des Verdachtsschwellwertes oder liegen beide Empfangssignalstärken unterhalb des Verdachtsschwellwertes, dann kann das ein Indiz dafür sein, dass eine mangelnde Betriebsfähigkeit der Positionsbestimmungsvorrichtung droht. In diesem Fall wird eine Entscheidung zur Auslösung einer Signalisierung getroffen. Der Verdachtsschwellwert kann von der jeweiligen Positionsbestimmungsvorrichtung abhängig sein, wird vorzugsweise empirisch ermittelt und in einem Speicher oder als Teil des Auswertealgorithmus hinterlegt.

Der Verdachtsschwellwert kann jedoch auch aus mehreren Empfangssignalstärken errechnet werden. Beispielsweise kann der Verdachtsschwellwert auf einer oder mehreren ermittelten ersten Empfangssignalstärken beruhen. In diesem Fall kann das Auswerten der beiden Empfangssignalstärken folgende beiden Schritte umfassen: Ermitteln des Verdachtsschwellwertes auf Grundlage wenigstens einer ersten Empfangssignalstärke, bevorzugt mehrerer erster Empfangssignalstärken, und Vergleichen der zweiten Empfangssignalstärke mit dem Verdachtsschwellwert.

Gemäß der Erfindung ist der Vergleichswert ein Abweichungsschwellwert (relativer Schwellwert), wobei beim Auswerten der ersten Empfangssignalstärke und der zweiten Empfangssignalstärke die erste Empfangssignalstärke mit der zweiten Empfangssignalstärke verglichen werden, wobei das Auslösen der Signalisierung erfolgt, wenn die zweite Empfangssignalstärke von der ersten Empfangssignalstärke um einen vorgegebenen Abweichungsschwellwert abweicht. Der Vergleich kann insbesondere derart erfolgen, dass eine Differenz zwischen den beiden Empfangssignalstärken gebildet wird und die Signalisierung ausgelöst wird, wenn der Betragswert dieser Differenz oberhalb des Abweichungsschwellwertes liegt. Es kann beim Auswerten auch berücksichtigt werden, ob die zweite Empfangssignalstärke oberhalb oder unterhalb der ersten Empfangssignalstärke liegt, beispielsweise in dem die Differenz vorzeichenabhängig ausgewertet wird. Vorzugsweise erfolgt die Signalisierung jedoch unabhängig hiervon, da auch eine sprunghafte Abweichung nach oben eine drohende mangelnde Betriebsfähigkeit andeuten kann.

Der Abweichungsschwellwert kann vorbestimmt sein oder anhand von Messungen mehrerer Empfangssignalstärken im Vorwege oder während des Betriebs der Positionsbestimmungsvorrichtung bestimmt werden, beispielsweise in Form eines Vielfachen (z. B. Doppelten) der Schwankungsbreite der mehreren gemessenen Empfangssignalstärken.

Der Abweichungsschwellwert oder der Verdachtsschwellwert kann als Betragswert hinterlegt sein. Vorzugsweise kann der Abweichungsschwellwert in einem Bereich zwischen 5 dBm und 20 dBm liegen. Wird ein Verdachtsschwellwert eingesetzt, dann kann dieser in einem Bereich zwischen 5 dBm und 40 dBm liegen, vorzugsweise zwischen 10 dBm und 30 dBm. Alternativ kann der Abweichungsschwellwert oder der Verdachtsschwellwert als Teilfaktor (Prozentwert) hinterlegt sein, welcher von den gemessenen Empfangssignalstärken abhängt. Bevorzugt liegt der Abweichungsschwellwert in einem Bereich zwischen 10% und 50% des Mittelwertes der Empfangssignalstärken über mehrere Messungen hinweg. Üblicherweise erzeugen die empfangenen Satellitensignale in der Empfängerantenne des GNSS-Empfängers Feldstärken mit einer Leistung in einem Bereich zwischen 30 und 50 dBm (Dezibel Milliwatt). Der Mittelwert über mehrere Messungen liegt hierbei zwischen 40 und 45 dBm. Dies ist insbesondere bei einem Empfang von GPS-Signalen der Fall.

Gemäß einer bevorzugten Weiterentwicklung kann kumulativ ein Vergleich einer, zweier oder mehrerer Empfangssignalstärken mit dem Verdachtsschwellwert und vorher, gleichzeitig oder anschließend ein Vergleich einer oder zweier Empfangssignalstärke(n) miteinander erfolgen. In diesem Fall erfolgt die Signalisierung vorzugsweise dann, wenn beide Vergleiche auf eine drohende mangelnde Betriebsfähigkeit hindeuten.

Ein Abfall der Empfangssignalstärke kann unter Umständen von Umgebungsfaktoren abhängen, die nichts mit der eigentlichen Funktionsfähigkeit der Positionsbestimmungsvorrichtung zu tun haben.

Beispielsweise kann es sein, dass sich das Fahrzeug und somit die Positionsbestimmungsvorrichtung in einer Schlucht oder in einem Straßentunnel befinden. In diesem Fall sollte eine Signalisierung ausbleiben, um die Anzahl von Fehlalarmen zu verringern.

Gemäß einer bevorzugten Weiterbildung wird dazu das erfindungsgemäße Verfahren ergänzt um das Ermitteln wenigstens einer dritten Empfangssignalstärke des vom GNSS-Empfänger empfangenen GNSS-Signals, das Auswerten auch der dritten Empfangssignalstärke und Entscheiden, dass eine Signalisierung ausgelöst wird, in Abhängigkeit vom Ergebnis des Auswertens der dritten Empfangssignalstärke. Insbesondere erfolgt das Ermitteln der dritten Empfangssignalstärke nach dem Ermitteln der zweiten Empfangssignalstärke, welches nach dem Ermitteln der ersten Empfangssignalstärke erfolgt. Mit dem Entscheiden zur Auslösung einer Signalisierung in Abhängigkeit von der Auswertung von einer ersten, einer zweiten und wenigstens einer dritten Empfangssignalstärke wird vermieden, dass eine Signalisierung bereits in Abhängigkeit von der ersten und der zweiten Empfangssignalstärke erfolgt, beispielsweise wenn die zweite Empfangssignalstärke ein bestimmtes erstes Vielfaches der ersten Empfangssignalstärke von kleiner eins unterschreitet, wie es bei der Abschattung in einem Tunnel der Fall ist. Beispielsweise kann vorgesehen sein, eine Signalisierung auszulösen, wenn die zweite Empfangssignalstärke ein bestimmtes erstes Vielfaches der ersten Empfangssignalstärke von kleiner eins (beispielsweise 0,25) unterschreitet und die dritte Empfangssignalstärke im Rahmen einer vorgegebenen maximalen Abweichung mit der ersten Empfangssignalstärke übereinstimmt (beispielsweise auf + / - 25 %).

Zusätzlich wird eine Position der Positionsbestimmungsvorrichtung mittels des vom GNSS-Empfänger empfangenen GNSS-Signals ermittelt und mit einem in einem Speicher hinterlegten Satz an Schwachempfangsgebieten verglichen, in denen Störungen und/oder ein Fehlen des GNSS-Empfangs bekannt sind. Insbesondere wird im zuvor genannten Falle der Ermittlung und des Auswertens einer dritten Empfangssignalstärke eine erste Position anhand von GNSS-Signalen ermittelt, die die erste Empfangssignalstärke aufweisen und eine zweite Position anhand von GNSS-Signalen ermittelt, die die dritte Empfangssignalstärke aufweisen. Über das Auslösen einer Signalisierung wird dann in Abhängigkeit vom Ergebnis des Positionsvergleichs entschieden.

Korreliert im Falle von nur zwei ermittelten Empfangssignalstärken die ermittelte Position nicht mit einem Schwachempfangsgebiet (z. B. weil die ermittelte Position in keinen Schwachempfangsgebiet oder nicht innerhalb eines vorgegebenen Abstands zu einem Schwachempfangsgebiet außerhalb des Schwachempfangsgebiets liegt), so wird eine Signalisierung ausgelöst. Korrelieren im Falle von drei ermittelten Empfangssignalstärken zum Beispiel sowohl die erste als auch die zweite ermittelte Position mit demselben Schwachempfangsgebiet (z. B. weil die erste und die zweite Position in demselben Schwachempfangsgebiet oder innerhalb eines vorgegebenen Abstands zu demselben Schwachempfangsgebiet außerhalb desselben Schwachempfangsgebiets liegen), so wird keine Signalisierung ausgelöst. Korreliert hingegen nur die erste oder nur die zweite Position oder keine der ersten und der zweiten Positionen mit einem Schwachempfangsgebiet, oder korrelieren die erste und die zweite Position mit verschiedenen Schwachempfangsgebieten, so wird eine Signalisierung ausgelöst.

Der Satz an Schwachempfangsgebieten kann regelmäßig oder ereignisabhängig aktualisiert werden, beispielsweise indem ein solcher Satz in Form eines Software-Updates von einer Zentrale über das Mobilfunknetz an die Positionsbestimmungsvorrichtung übermittelt wird, die zum Empfang des Software-Updates mit einem Mobilfunkmodul ausgerüstet ist.

Insbesondere können die hinterlegten Schwachempfangsgebiete aber in Form von Geodaten gespeichert sein, die den Umriss des Schwachempfangsgebietes repräsentieren. Die Position der Positionsbestimmungsvorrichtung kann hierbei eine aktuelle bzw. gegenwärtige Position sein. Es kann sich jedoch auch um eine Position der Positionsbestimmungsvorrichtung an dem Zeitpunkt handeln, welcher der ersten oder der zweiten ermittelten Empfangssignalstärke entspricht, also etwa die Position der Positionsbestimmungsvorrichtung an dem ersten oder zweiten Ermittlungszeitpunkt.

Gemäß einer bevorzugten Ausführungsform gehören die ermittelte erste Empfangssignalstärke und die ermittelte zweite Empfangssignalstärke zu einer Folge von Empfangssignalstärken des mittels des GNSS-Empfängers empfangenen GNSS-Signals, welche fortlaufend ermittelt werden. Die einzelnen Empfangssignalstärken bilden also Messpunkte oder Messwerte in der Folge. Es können mehrere Messpunkte pro Tag in die Folge aufgenommen werden. Soll eine Mittelwertbildung stattfinden, dann kann dies die letzten Messpunkte in der Folge betreffen, beispielsweise die letzten 3 bis 10 Messpunkte oder sämtliche Messpunkte, die innerhalb eines Zeitraums, beispielsweise innerhalb von 24 Stunde oder an einem Tag ermittelt wurden.

Die Empfangssignalstärken oder Messpunkte der Folge können durch einen internen oder externen Zeitgeber getriggert sein. Das bedeutet, dass die Empfangssignalstärken der Folge in vorgegebenen Zeitabständen und/oder zu vorgegebenen Zeitpunkten ermittelt werden. Das Ermitteln der Empfangssignalstärken wird jedoch bevorzugterweise durch ein Ermittlungssignal getriggert, welches von der Positionsbestimmungsvorrichtung empfangen wird. Das Ermittlungssignal kann durch den oben genannten externen Zeitgeber erzeugt werden. Vorzugsweise handelt es sich jedoch um ein Triggersignal, welches von einer in Straßennähe angebrachten straßenseitigen Signalvorrichtung, insbesondere einer DSRC-Sendeeinrichtung zur dedizierten Kurzstrecken-Kommunikation (DSRC = dedicated short-range communication), fortlaufend oder beim Vorbeifahren des Fahrzeugs mit der Positionsbestimmungsvorrichtung ausgesendet und von der Positionsbestimmungsvorrichtung fahrzeugseitig mittels einer entsprechenden (DSRC-)Empfangseinrichtung empfangen wird. Die straßenseitige Signalvorrichtung kann beispielsweise an einer Kontrollstelle, insbesondere einer sich über die Straße erstreckende Kontrollbrücke, befestigt sein. Die straßenseitige Signalvorrichtung kann zu einer Empfangsvorrichtung weitergebildet sein, um die ermittelten Empfangssignalstärken von der Positionsbestimmungsvorrichtung zu empfangen, deren fahrzeugseitige Empfangseinrichtung zu einer Sendeeinrichtung weitergebildet ist. Alternativ oder kumulativ kann die Kontrollbrücke oder Kontrollstelle Funkmittel oder andere Kommunikationsmittel aufweisen, um eine Kommunikationsverbindung mit der Positionsbestimmungsvorrichtung herzustellen. Über eine solche Kommunikationsverbindung können die ermittelten Empfangssignalstärken durch die Signalvorrichtung aus der Positionsbestimmungsvorrichtung ausgelesen werden.

Vorzugsweise wird in Abhängigkeit vom Ergebnis des Auswertens auch dann entschieden, dass eine Signalisierung ausgelöst wird, wenn die Positionsbestimmungsvorrichtung mittels des vom GNSS-Empfänger empfangenen GNSS-Signals bei der ersten Empfangssignalstärke und bei der zweiten Empfangssignalstärke jeweils eine Positionsbestimmung durchführen kann. Mit anderen Worten kann die Signalisierung, dass eine mangelnde Betriebsfähigkeit der Positionsbestimmungsvorrichtung droht, auch dann erfolgen, wenn die Positionsbestimmungsvorrichtung scheinbar weiterhin korrekt funktioniert, indem das bei der ersten Empfangssignalstärke empfangene GNSS-Signal genauso zu einer validen Positionsbestimmung führen kann, wie das bei der zweiten Empfangssignalstärke empfangene GNSS-Signal.

In Abhängigkeit vom Ergebnis des Auswertens kann zusätzlich zur Signalisierung auch eine Abschätzung erfolgen, zu welchem Zeitpunkt die mangelnde Betriebsfähigkeit voraussichtlich eintritt. Die Abschätzung kann auf empirische Werte und Parameter basieren, die in einem Speicher der Positionsbestimmungsvorrichtung oder in einem zentralen Speicher abgelegt sind. Beispielsweise ist es denkbar, dass die Stärke der Abweichung der beiden ermittelten Empfangssignalstärken voneinander als Grundlage für eine Abschätzung herangezogen wird. Alternativ oder zusätzlich können weitere Parameter eine Rolle spielen, beispielsweise eine statistische Kennzahl der ermittelten Empfangssignalstärken, wenn eine Folge von solchen Empfangssignalstärken ermittelt wird.

Neben dem beschriebenen Verfahren werden erfindungsgemäß eine Reihe weiterer Komponenten vorgeschlagen, deren Eigenheiten und bevorzugte Ausführungsformen nachfolgend erläutert werden. Dies sind ein Signalisierungssystem gemäß Anspruch 4, ein Gebührenerhebungssystem gemäß Anspruch 8, eine Positionsbestimmungsvorrichtung gemäß Anspruch 9 und ein Computerprogrammprodukt gemäß Anspruch 10. Es wird jedoch darauf hingewiesen, dass vorangehend im Zusammenhang mit dem Verfahren dargelegte Merkmale auch in besonderen Ausführungsformen des Signalisierungssystems, des Gebührenerhebungssystems, der Positionsbestimmungsvorrichtung und des Computerprogrammprodukts zur Anwendung kommen können und dort entsprechende Vorteile entfalten. Dies gilt auch umgekehrt für nachfolgend erläuterte Merkmale, die als Verfahrensmerkmale im erfindungsgemäßen Verfahren entsprechende Vorteile aufweisen.

Gemäß einer kompakten Ausführungsform ist das Auswertungsmittel oder das Entscheidungsmittel in der Positionsbestimmungsvorrichtung angeordnet. Es können auch sowohl das Auswertungsmittel als auch das Entscheidungsmittel in der Positionsbestimmungsvorrichtung angeordnet sein. Die Auswertung der beiden Empfangssignalstärken und/oder das Treffen der Entscheidung aufgrund des Auswerteergebnisses erfolgen in diesem Fall in der Positionsbestimmungsvorrichtung. Die ist insbesondere dann sinnvoll, wenn die Überwachung der im Straßenverkehr befindlichen Positionsbestimmungsvorrichtungen möglichst dezentral erfolgen soll.

Alternativ kann eines oder können beide ermittelten Empfangssignalstärken mittels Funk an eine Zentraleinrichtung des Signalisierungssystems bzw. des Gebührenerhebungssystems übermittelt werden. In diesem Fall weist die Positionsbestimmungsvorrichtung das Ermittlungsmittel und Funkmittel oder eine Funkvorrichtung (beispielsweise ein Mobilfunkmodul) auf. Das Auswertungsmittel und das Entscheidungsmittel sind dann Teil der Zentraleinrichtung. Die Zentraleinrichtung kann als eine Anordnung aus einem oder mehreren Rechnern ausgebildet sein, welche geographisch verteilt aufgestellt ist. Vorzugsweise kann eine Zentraleinrichtung über Funk mit mehreren Positionsbestimmungsvorrichtungen verbunden sein. Eine solche zentrale Auswertung der Empfangssignalstärken und darauf basierte Entscheidungsfindung hat den Vorteil, dass der Auswertealgorithmus auch zentral überarbeitet, optimiert und gewartet werden kann. Die Funkvorrichtung kann sich für die Kommunikation zwischen der Positionsbestimmungsvorrichtung und der Zentraleinrichtung eines Mobilfunkprotokolls wie beispielsweise dem verbreiteten GSM-Standard (GSM - Global System for Mobile Communications) bedienen.

Bevorzugterweise weist die Positionsbestimmungsvorrichtung eine Signalisierungsvorrichtung auf und ist ausgebildet, bei positiver Entscheidung des Entscheidungsmittels über das Auslösen der Signalisierung, die Signalisierung auszulösen. Die Signalisierungsvorrichtung kann insbesondere Leuchtdioden (LEDs), ein Display und/oder andere optische oder akustische Signalgeber umfassen, welche in der Lage sind, die Signalisierung an den Fahrzeugführer zu übermitteln. Alternativ oder zusätzlich kann die Signalisierungsvorrichtung Funkmittel aufweisen, über die ein Funksignal als Signalisierung an eine externe Einrichtung übertragen wird. Dort kann die Signalisierung dazu führen, dass eine Nachricht an den Fahrzeughalter versandt wird und andere notwendige Schritte zur Behebung des Problems der drohenden mangelnden Betriebsfähigkeit der Positionsbestimmungsvorrichtung eingeleitet werden.

Das vorangehend beschriebene Verfahren kann gänzlich oder in Teilen als bzw. in einem Computerprogrammprodukt verwirklicht sein, der in einem Speicher und/oder einem Prozessor der Positionsbestimmungsvorrichtung abgelegt ist. Das Computerprogrammprodukt kann auch zumindest teilweise auf der Zentraleinrichtung abgelegt sein, sofern eine solche vorgesehen ist.

Die Erfindung wird im Folgenden anhand von Ausführungsbeispielen unter Bezugnahme auf die Figuren erläutert. Hierbei zeigen:
- Fig. 1a: eine schematische Darstellung einer erfindungsgemäßen Positionsbestimmungsvorrichtung;
- Fig. 1b: eine schematische Darstellung einer ersten alternativen erfindungsgemäßen Positionsbestimmungsvorrichtung;
- Fig. 1c: eine schematische Darstellung einer zweiten alternativen erfindungsgemäßen Positionsbestimmungsvorrichtung;
- Fig. 2: eine schematische Darstellung eines erfindungsgemäßen Signalisierungssystems mit einer Positionsbestimmungsvorrichtung und einer Zentraleinrichtung;
- Fig. 3: eine schematische Darstellung eines Signalisierungssystems mit mehreren Positionsbestimmungsvorrichtungen und einer Zentraleinrichtung;
- Fig. 4: ein Flussdiagramm eines erfindungsgemäßen Verfahrens;
- Fig. 5: ein erstes Diagramm mit eingetragenen Messwerten von Empfangssignalstärken eines GNSS-Signals;
- Fig. 6: ein zweites Diagramm mit eingetragenen Messwerten von Empfangssignalstärken eines GNSS-Signals; und
- Fig. 7: ein drittes Diagramm mit eingetragenen Messwerten von Empfangssignalstärken eines GNSS-Signals.

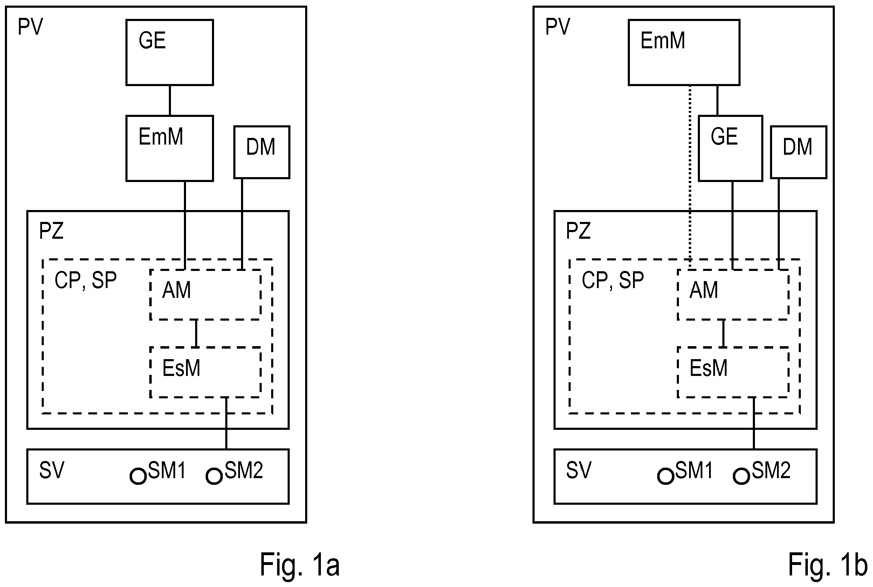

In der Fig. 1a wird eine Positionsbestimmungsvorrichtung PV gemäß einer erfindungsgemäßen Ausführungsform schematisch dargestellt. Die Positionsbestimmungsvorrichtung PV weist einen GNSS-Empfänger GE auf. Hier handelt es sich insbesondere um einen GPS-Empfänger. Der GNSS-Empfänger GE weist eine Empfangsantenne auf und ist ausgebildet, Satellitensignale von GNSS-Navigationssatelliten zu empfangen, aus den Satellitensignalen die eine aktuelle Position der Positionsbestimmungsvorrichtung PV zu bestimmen.

Die Positionsbestimmungsvorrichtung PV weist ein Ermittlungsmittel EmM auf, welches in der vorliegenden Variante dem GNSS-Empfänger GE nachgeschaltet ist. Das Ermittlungsmittel ist ausgebildet, Empfangssignalstärken von GNSS-Signalen zu ermitteln, welche vom GNSS-Empfänger GE empfangen werden. Das Ermittlungsmittel EmM wird kann auch Teil des GNSS-Empfängers GE sein, wird aber hier und in der nachfolgenden Figur zur besseren Veranschaulichung als eigenständiges Modul dargestellt. Weiterhin weist die Positionsbestimmungsvorrichtung PV einen Prozessor PZ mit einem Speicher SP auf, in dem ein Computerprogrammprodukt CP hinterlegt ist. Das Computerprogrammprodukt CP befindet sich in dem Speicher SP und wird zeitweise im und vom Prozessor PZ ausgeführt. Deshalb werden sowohl das Computerprogrammprodukt CP als auch der Speicher SP als ein Block im Prozessor PZ gestrichelt dargestellt. Als Teil des Computerprogrammprodukts CP sind im Speicher SP abgelegt bzw. laufen auf dem Prozessor PZ: Ein Auswertungsmittel AM und ein Entscheidungsmittel EsM.

Der Prozessor PZ ist ausgebildet, die von dem Ermittlungsmittel EmM ermittelten Empfangssignalstärken zu empfangen und ebenso die von dem GNSS-Empfänger GE bestimmten Positionen - entweder indirekt über das Ermittlungsmittel EmM oder direkt vom GNSS-Empfänger GE (gepunktete Kommunikationsverbindung). Das Auswertungsmittel AM und das Entscheidungsmittel EsM sind ausgebildet, die ermittelten Empfangssignalstärken auszuwerten und aufgrund eines Ergebnisses der Auswertung zu entscheiden, ob eine Signalisierung ausgelöst wird oder nicht. Die Signalisierung erfolgt dann, wenn aufgrund der Auswertung festgestellt bzw. ermittelt wurde, dass eine drohende mangelnde Betriebsfähigkeit der Positionsbestimmungsvorrichtung PV vorliegt.

Die Positionsbestimmungsvorrichtung PV weist überdies ein DSRC-Modul DM auf, welches an den Prozessor PZ gekoppelt und ausgebildet ist, ein Triggersignal von einer straßenseitigen DRSC-Vorrichtung zu empfangen und dieses (ggf. in abgewandelter Form) an den Prozessor PZ weiterzuleiten. Das Auswertemittel AM ist ausgebildet, in Antwort auf den Empfang des Triggersignals eine oder mehrere Empfangssignalstärken von dem Ermittlungsmodul EmM anzufordern. Prinzipiell kann das Auswertungsmittel AM alternativ oder kumulativ ausgebildet sein, in vorgegebenen Zeitabständen, zufällig oder bedingt durch andere Ereignisse (z. B. das Befahren eines bestimmten Gebietes oder das Überfahren einer bestimmten Grenze) eine oder mehrere Empfangssignalstärken von dem Ermittlungsmodul EmM anzufordern. Im alternativen Fall braucht die Positionsbestimmungsvorrichtung PV kein DSRC-Modul DM zu umfassen.

Fig. 1b zeigt eine erste alternative Positionsbestimmungsvorrichtung PV, in der das Ermittlungsmittel EmM dem GNSS-Empfänger GE im Empfangswege vorangeschaltet ist. Die ermittelten Empfangssignalstärken können entweder dem Prozessor PZ entweder indirekt über den GNSS-Empfänger GE oder direkt (gepunktete Kommunikationsverbindung) bereitgestellt werden.

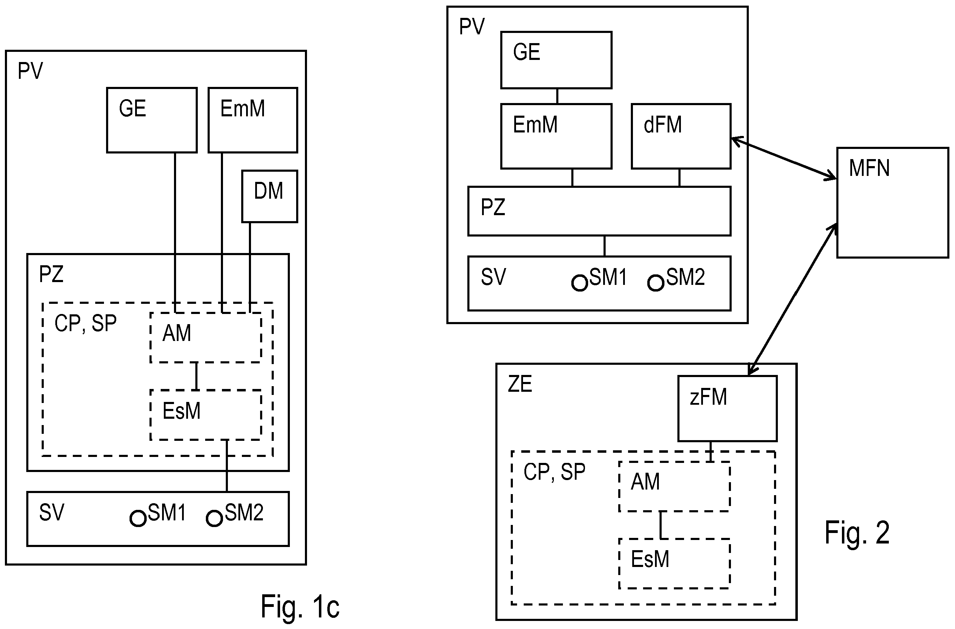

Fig. 1c zeigt eine zweite alternative Positionsbestimmungsvorrichtung PV, in der das Ermittlungsmittel EmM und der GNSS-Empfänger GE jeweils eine eigene Empfangsantenne aufweisen und ihre Daten dem Prozessor PZ unabhängig voneinander bereitstellen. So kann der Prozessor PZ taktweise gleichzeitig oder innerhalb eines vorbestimmten Zeitrahmens von beispielsweise 0,5 s Daten der Empfangssignalstärke von dem Ermittlungsmodul EmM und Daten der Position von dem GNSS-Empfänger GE anfordern.

In der Fig. 2 wird eine alternative Ausführungsform der Positionsbestimmungsvorrichtung PV zusammen mit einer Zentraleinrichtung ZE schematisch ohne Empfangs- und Sendeantennen dargestellt. Während die in Fig. 2 dargestellte Positionsbestimmungsvorrichtung PV weiterhin den GNSS-Empfänger GE und das Ermittlungsmittel EmM aufweist, um die GNSS-Signale zu empfangen und deren Empfangssignalstärken zu ermitteln, sowie einen Prozessor zum Steuern der Komponenten der Positionsbestimmungsvorrichtung PV, sind das Auswertungsmittel AM und das Entscheidungsmittel EsM in Form eines Computerprogrammprodukts CP im Speicher SP der Zentraleinrichtung ZE abgelegt und laufen bzw. wirken dort. Die ermittelten Empfangssignalstärken werden von der Positionsbestimmungsvorrichtung PV mittels eines Funkmittels dFM in das Mobilfunknetz MFN ausgesendet und mittels eines weiteren Kommunikationsmittels zFM (welches ein Funkmittel, ein Router oder ein Gateway sein kann) an der Zentraleinrichtung ZE zumindest mittelbar (z. B. über das Internet oder das drahtgebundene Telefonnetz) aus dem Mobilfunknetz MFN empfangen.

Über die Kommunikationsmittel zFM, dFM erfolgt auch eine Übermittlung des Ergebnisses der Auswertung der Empfangssignalstärken in der Zentraleinrichtung ZE zurück an die Positionsbestimmungsvorrichtung PV. Diese weist neben dem Funkmittel FM auch eine Signalisierungsvorrichtung SV mit Signalmitteln SM1, SM2 auf. Während das erste Signalmittel SM1 ein optischer Signalgeber wie beispielsweise eine LED ist, kann es sich bei dem zweiten Signalmittel SM2 um einen akustischen Signalgeber handeln. Ist das Ergebnis der Auswertung der Empfangssignalstärken, dass eine Signalisierung ausgelöst werden muss, dann wird dies mittels der Funkmittel FM von der Zentraleinrichtung ZE an die Positionsbestimmungsvorrichtung PV mitgeteilt und daraufhin mittels der Signalmittel SM1, SM2 dem Benutzer der Positionsbestimmungsvorrichtung PV signalisiert.

Bei dem Benutzer der Positionsbestimmungsvorrichtung PV handelt es sich insbesondere um einen Fahrzeugführer oder Fahrzeughalter eines Fahrzeugs, in dem die Positionsbestimmungsvorrichtung PV als On-Board Unit (OBU) bzw. Fahrzeuggerät (FzG) oder als Teil eines solchen Gerätes installiert ist. Die Positionsbestimmungsvorrichtung PV ist zudem Teil eines Gebührenerhebungssystems. Sie ist ausgebildet, die mittels des GNSS-Empfängers empfangenen Satellitensignale zu empfangen und fortlaufend die Position des Fahrzeuges zu berechnen. Auf Basis der berechneten Positionen kann ermittelt werden, welche gebührenpflichtigen Straßen, Straßenabschnitte, Verkehrsstrukturen etc. durch das Fahrzeug befahren wurden, um dies dem Fahrzeughalter in Rechnung stellen zu können.

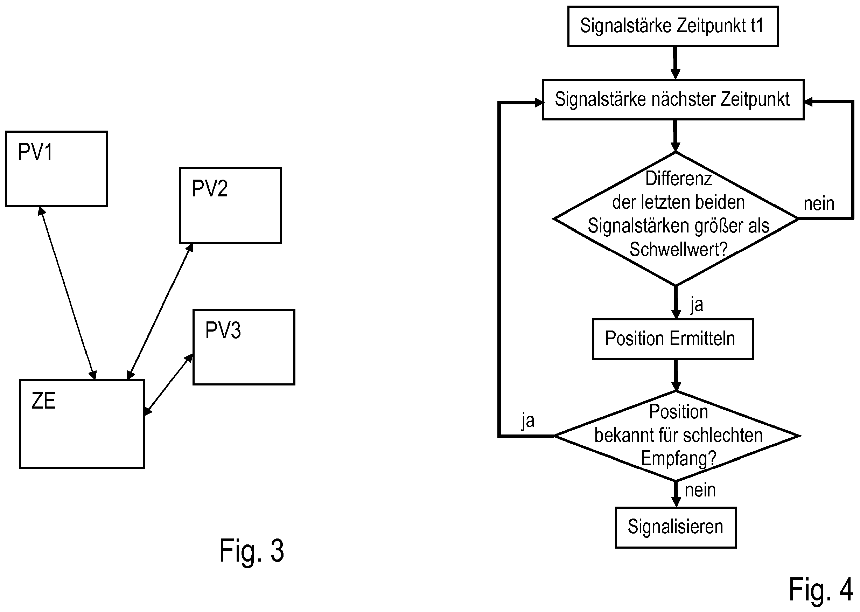

Mittels der Signalisierungsvorrichtung SV wird dem Fahrzeugführer oder Fahrzeughalter signalisiert, dass eine mangelnde Betriebsfähigkeit, insbesondere ein Ausfall, der Positionsbestimmungsvorrichtung PV droht. Die Positionsbestimmungsvorrichtung PV gemäß Fig. 1 ist somit Teil eines erfindungsgemäßen Signalisierungssystems. Ebenso sind die Positionsbestimmungsvorrichtung PV und die Zentraleinrichtung ZE aus der Fig. 2 Teil eines erfindungsgemäßen Signalisierungssystems gemäß einer alternativen Ausführungsform. Die in Fig. 2 gezeigte Zentraleinrichtung ZE kann als Teil des Signalisierungssystems mit mehreren Positionsbestimmungsvorrichtungen PV1, PV2, PV3 zumindest zeitweise über das Mobilfunknetz in Kommunikationskontakt stehen, wobei die Positionsbestimmungsvorrichtungen PV1, PV2, PV3 jeweils in einem Fahrzeug (in den Figuren nicht dargestellt) angeordnet sind. Dies wird in der Fig. 3 veranschaulicht.

Das erfindungsgemäße Verfahren zur Signalisierung der drohenden mangelnden Betriebsfähigkeit der Positionsbestimmungsvorrichtung PV gemäß einer bevorzugten Ausführungsform wird in Fig. 4 anhand eines Flussdiagramms nachfolgend erläutert. Das hier beschriebene Verfahren kann mittels der Positionsbestimmungsvorrichtungen PV in der integrierten Ausgestaltung gemäß Fig. 1 oder mittels des als verteiltes System ausgebildeten Signalisierungssystems mit der Positionsbestimmungsvorrichtung PV und der Zentraleinrichtung ZE gemäß Fig. 2 durchgeführt werden.

Bei dem in Fig. 4 veranschaulichten Verfahren wird zunächst zu einem Zeitpunkt t1 eine Signalstärke eines vom GNSS-Empfänger empfangenen Satellitensignals ermittelt. Es kann sich hierbei beispielsweise um die Empfangssignalstärke des signalstärksten, am GNSS-Empfänger bzw. an seiner Antenne ankommenden Satellitensignals handeln. Die am Zeitpunkt t1 ermittelte Empfangssignalstärke dient als erster Datenpunkt oder Messpunkt einer Folge von Messpunkten. Diese Messpunkte werden bestimmt, indem nachfolgend fortlaufend weitere Empfangssignalstärken jeweils zu einem bestimmten Zeitpunkt ermittelt und in die Folge mit aufgenommen werden, wobei nach jeder Ermittlung einer weiteren Empfangssignalstärke diese Empfangssignalstärke mit der jeweils davor liegenden Empfangssignalstärke verglichen wird.

In einem nächsten Schritt, der den Ausgangspunkt einer Programmschleife bildet, wird also eine Signalstärke des vom GNSS-Empfänger empfangenen Satellitensignals zu einem späteren Zeitpunkt als t1 ermittelt. Auch hier kann es sich, analog der vorhergehenden Ermittlung, um die Empfangssignalstärke des an diesem späteren Zeitpunkt signalstärksten, am GNSS-Empfänger bzw. an seiner Antenne ankommenden Satellitensignals handeln. Anschließend wird die Differenz zwischen den letzten beiden ermittelten Empfangssignalstärken berechnet. Ist diese Differenz kleiner als ein vorgegebener Abweichungsschwellwert, dann wird nichts weiter veranlasst, und es kann bei der nächsten vorgesehenen Gelegenheit eine nachfolgende Empfangssignalstärke ermittelt werden. Die zeitlich vorhergehende Empfangssignalstärke wird dann als erste Empfangssignalstärke und die nachfolgende Empfangssignalstärke wird als zweite Empfangssignalstärke erneut der Differenzbildung und dem Vergleich mit dem Schwellwert zugeführt. Bei der Differenz kann es sich um die betragsmäßige Differenz in Form eines relativen Abstands der beiden Empfangssignalstärken handeln, der mit dem (in diesem Fall stets positiven) Abweichungsschwellwert verglichen wird.

Wird der Schwellwert überschritten, dann kann das ein Indiz dafür sein, dass die Positionsbestimmungsvorrichtung PV beeinträchtigt ist und im Begriff ist, seine Betriebsfähigkeit einzubüßen. Es kann jedoch auch der Fall vorliegen, dass sich die Positionsbestimmungsvorrichtung PV beim ermitteln der ersten Empfangssignalstärke oder der zweiten Empfangssignalstärke an einem Ort mit eingeschränktem Empfang befindet oder befand, also beispielsweise in einem Tunnel oder in einem engen Tal, in dem die Satellitensignale nicht gut eindringen. Um in einem solchen Fall einen Fehlalarm zu vermeiden, wird eine Position der Positionsbestimmungsvorrichtung ermittelt. Es wird dann in einem weiteren Schritt in Erfahrung gebracht, ob bekannt ist, dass an der ermittelten Position ein schlechter Empfang für das GNSS-Signal besteht. Dies kann beispielsweise geschehen, indem die Position mit karteninformationsbedingten Geodaten verglichen wird, welche Schwachempfangsgebiete im Straßenverlauf repräsentieren. Diese karteninformationsbedingten Geodaten beschreiben Gebiete, in denen aufgrund von einer digitalen Karte entnehmbaren topographischen Besonderheiten im Straßenverlauf (Tunnel, Schlucht) mit einem schwachen oder keinem GNSS-Signalempfang gerechnet werden muss. Ein entsprechender Satz an solchen Schwachempfangsgebieten in einem Speicher innerhalb oder außerhalb der Positionsbestimmungsvorrichtung, insbesondere in der Zentraleinrichtung, hinterlegt sein.

Erst wenn der Vergleich der ermittelten Position mit dem gespeicherten Satz an Schwachempfangsgebieten negativ ausfällt, die Abweichung der Empfangssignalstärke also nicht durch eine ungünstige Position während des Empfangs zurückzuführen ist, wird entschieden, eine Signalisierung zu erwirken. Es erfolgt dann also die Signalisierung, dass in Zukunft eine mangelnde Betriebsfähigkeit droht. Andernfalls wird so verfahren, wie in dem Fall, dass kein Schwellwertübertritt erfolgt. Der tatsächliche Verlust der Betriebsfähigkeit kann, wie nachfolgend noch erläutert wird, erst nach Tagen, Wochen oder sogar Monaten eintreten. Wie bereits in Zusammenhang mit den Fig. 1a, 1b, 1c und 2 erläutert, kann die Analyse der ermittelten Empfangssignalstärken in der Positionsbestimmungsvorrichtung PV gemäß Fig. 1a-1c oder in der Zentraleinrichtung ZE gemäß Fig. 2 erfolgen.

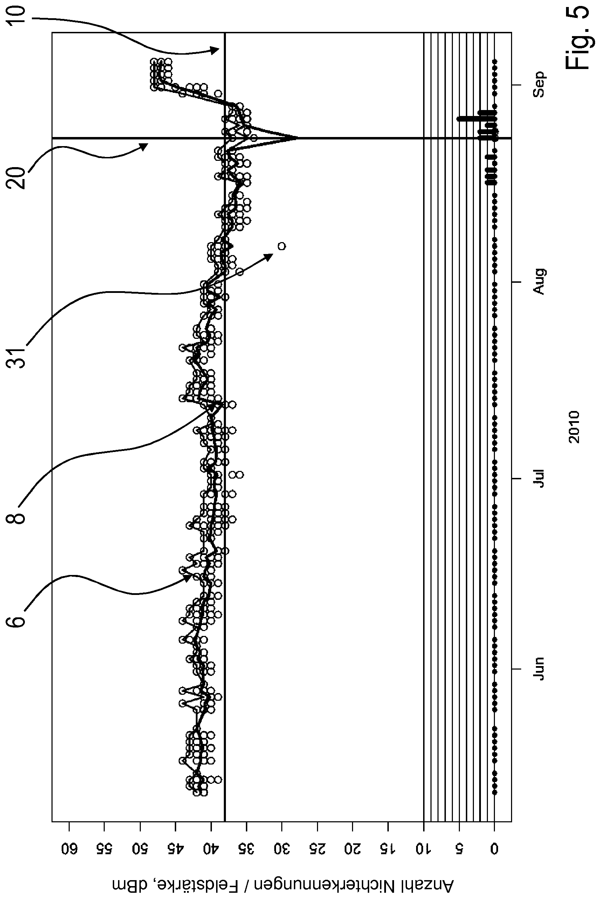

Die Fig. 5 bis 7 zeigen jeweils in einem Diagramm beispielhaft das Ergebnis einer Folge von ermittelten Empfangssignalstärken einige Monate vor und bis zu einer mangelnden Betriebsfähigkeit für drei unterschiedliche Positionsbestimmungsvorrichtungen PV. Die Empfangssignalstärken wurden fortlaufend erfasst. Um das erfindungsgemäße Verfahren anzuwenden, kann jeweils die zuletzt erfasste Empfangssignalstärke oder kann jeweils ein Mittelwert aus einer Anzahl an mehreren zuletzt erfassten Empfangssignalstärken als zweite ermittelte Empfangssignalstärke angesehen werden. Dementsprechend kann jede vor der zuletzt erfassten Empfangssignalstärke erfasste Empfangssignalstärke oder ein Mittelwert mehrerer Empfangssignalstärken, die vor den mehreren zuletzt erfassten Empfangssignalstärken erfasst wurden, als ermittelte erste Empfangssignalstärke angesehen werden. Entlang der Abszisse aufgetragen ist der Zeitverlauf, wobei der Auftrag tagesaufgelöst ist. Jeder Punkt entlang der Abszisse entspricht also einem Tag. Alle drei Datensätze (Fig. 5, 6, 7) betreffen den gleichen Zeitraum von Anfang Mai bis Mitte September 2010. Entlang der Ordinate sind zwei Parameter aufgetragen. Im unteren Abschnitt von 0 bis 10 ist die Anzahl an Nichterkennungen innerhalb eines Tages aufgetragen. Diese beziehen sich auf die gefüllten Kreise, die meist auf der Nulllinie angeordnet sind, was bedeutet, dass es an jenen Tagen keine Nichterkennungen gab, also keine Situationen, in denen die Positionsbestimmungsvorrichtungen PV aus den empfangenen Satellitensignalen keine Positionsbestimmung vornehmen konnte.

An den Tagen, für welchen kein Eintrag hinsichtlich der Anzahl an Nichterkennungen vorliegt, wurde die Positionsbestimmungsvorrichtung PV nicht eingesetzt, insbesondere das Fahrzeug nicht bedient. Anhand der Fig. 5 ist erkennbar, dass das Fahrzeug regelmäßig 6 Tage hintereinander genutzt wurde und dazwischen ein Tag ruhte. An jedem Tag fand zumindest einmal, in der Regel jedoch zwischen zweimal und fünfmal, jeweils eine Ermittlung einer Empfangssignalstärke statt. Dieser Vorgang wurde durch das Vorbeifahren an einer Kontrollstelle oder Kontrollbrücke ausgelöst, an dem eine Kurzstrecken-Funkvorrichtung, insbesondere eine DSRC-Sendeeinrichtung angeordnet war.

Durch ein Funksignal von der Kontrollstelle an die Positionsbestimmungsvorrichtung PV wurde das Ermitteln der Empfangssignalstärke getriggert, während das Messergebnis von der Positionsbestimmungsvorrichtung PV an die Kontrollstelle zurückgefunkt wurde. Jedes Messergebnis entspricht in den Diagrammen einem offenen Kreis, der eine Empfangssignalstärke entlang der Ordinate im oberen Abschnitt zwischen den Feldstärke-Werten 10 dBm und 60 dBm anzeigt. Es handelt sich hierbei um die Feldstärke des vom GNSS-Empfänger GE empfangenen Satellitensignals an der Empfangsantenne. Eine dünne Linie 6 verbindet die Maximalwerte 6 eines Tages der Empfangssignalstärken, während eine dickere Linie 8 den Verlauf der Durchschnittswerte 8 der Empfangssignalstärken jedes Tages nachzeichnet.

Parallel zur Abszisse deutet eine Linie 10 einen Verdachtsschwellwert 10 an. Dieser Verdachtsschwellwert 10 kann für jede Positionsbestimmungsvorrichtung PV oder jeden Typ Positionsbestimmungsvorrichtung PV separat bestimmt werden. Die drei unterschiedlichen Positionsbestimmungsvorrichtungen PV, aus denen die Messwerte für die drei Diagramme in den Fig. 5 bis 7 stammen, sind vom gleichen Typ und weisen den gleichen Verdachtsschwellwert 10 von 38 dBm auf. Die mittels dieser Positionsbestimmungsvorrichtungen PV ermittelten Empfangssignalstärken liegen bei einwandfreien Komponenten üblicherweise über diesem Wert.

Dabei wurde der Verdachtsschwellwert 10 in einer Schwellwertermittlungsphase von der Dauer eines vorbestimmten Zeitrahmens in der Zeit vor dem Jahr 2010 durch die wiederholte Ermittlung von ersten Empfangssignalstärken in der Weise bestimmt, dass durch die Positionsbestimmungsvorrichtung PV auf einen vorbestimmten Abstand (in den Fällen dieses Ausführungsbeispiels von 10 dBm) unterhalb des Mittelwerts der ermittelten ersten Empfangssignalstärken festgelegt wurde.

Dabei kann die Positionsbestimmungsvorrichtung PV ausgebildet sein, einen Verdachtsschwellwert nur dann zu bestimmen, wenn kein oder nicht mehr als eine vorbestimmte Anzahl von in der Schwellwertermittlungsphase ermittelter erster Empfangssignalstärken um mehr als den vorbestimmten Abstand unterhalb des Mittelwerts liegt.

Liegt nun ein oder liegen nun zwei oder mehr - nicht notwendigerweise unmittelbar - aufeinander folgende ermittelte zweite Empfangssignalstärken unterhalb dieses Verdachtsschwellwertes 10, dann wird in einer nicht erfindungsgemäßen Ausführungsform des Verfahren eine Signalisierung erfolgen. Insbesondere ist es in dieser nicht erfindungsgemäßen Ausführungsform möglich, eine Signalisierung lediglich in Abhängigkeit von nur der ersten oder nur der zweiten Empfangssignalstärke auszulösen. Alternativ kann die Signalisierung erfolgen, wenn zwar noch keine ermittelte Empfangssignalstärke den Verdachtsschwellwert 10 unterschritten hat, jedoch ein Vergleich zweier oder mehrerer der ermittelten Empfangssignalstärken auf eine drohende mangelnde Betriebsfähigkeit der Positionsbestimmungsvorrichtung PV hindeutet. Gemäß einer weiteren alternativen Ausführungsform erfolgt eine Signalisierung nur dann, wenn sowohl eine Unterschreitung des Verdachtsschwellwertes 10 erfolgt ist, als auch ein Vergleich zweier oder mehrerer der ermittelten Empfangssignalstärken auf eine drohende mangelnde Betriebsfähigkeit der Positionsbestimmungsvorrichtung PV hindeutet. Beispiele für Situationen, in denen ein Vergleich von Empfangssignalstärken auf eine drohende mangelnde Betriebsfähigkeit der Positionsbestimmungsvorrichtung PV hindeutet, werden nachfolgend erläutert.

Der Zeitpunkt, an dem die Positionsbestimmungsvorrichtung PV gemäß bisheriger nicht erfindungsgemäßer Warnverfahren als Defekt eingestuft wurde, ist mit einer zur Ordinate parallelen Linie 20 gekennzeichnet und wird nachfolgend als Defektzeitpunkt 20 bezeichnet. Bei dem Defektzeitpunkt 20 handelt es sich also um einen Zeitpunkt, an dem nach Vorgabe des Herstellers der Positionsbestimmungsvorrichtung PV zur Wartung gegeben werden müsste. Hierzu weisen herkömmliche Positionsbestimmungsvorrichtungen akustische und optische Warn- oder Fehleranzeigen auf, welche den Benutzer auf einen Defekt hinweisen. Die Entscheidung, dass ein Defektzeitpunkt 20 erreicht ist, kann auf der Auswertung der Anzahl an Nichterkennungen innerhalb eines bestimmten Zeitraums und / oder der Anzahl an aufeinander folgenden Nichterkennungen beruhen. Wie man in den Fig. 5 bis 7 sehen kann, häufen sich die Anzahl an Nichterkennungen in der Umgebung des Defektzeitpunkts 20.

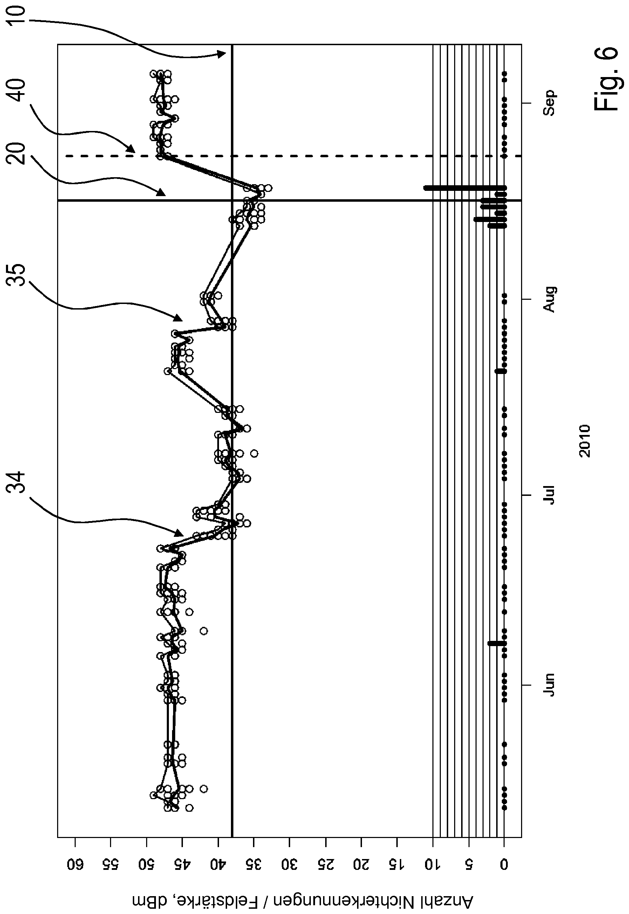

Anhand der Fig. 5 bis 7 wird erkennbar, dass Sprünge in den Empfangssignalstärken eintreten, noch bevor (wie in Fig. 6, vgl. ersten Sprung 34) irgendeines der Empfangssignalstärken den Verdachtsschwellwert 10 unterschreitet, oder zumindest noch bevor die ermittelten Empfangssignalstärken mehrheitlich oder vollständig unter den Verdachtsschwellwert 10 fallen und der Defektzeitpunkt 20 erreicht ist. Letzteres ist in allen drei Situationen, Fig. 5 bis 7, der Fall. Auch in diesen Fällen kann, je nach Implementierung des erfindungsgemäßen Verfahrens eine Signalisierung erfolgen, ohne eine/die Unterschreitung der Verdachtsschwellwert 10 mit in die Entscheidung einzubeziehen.

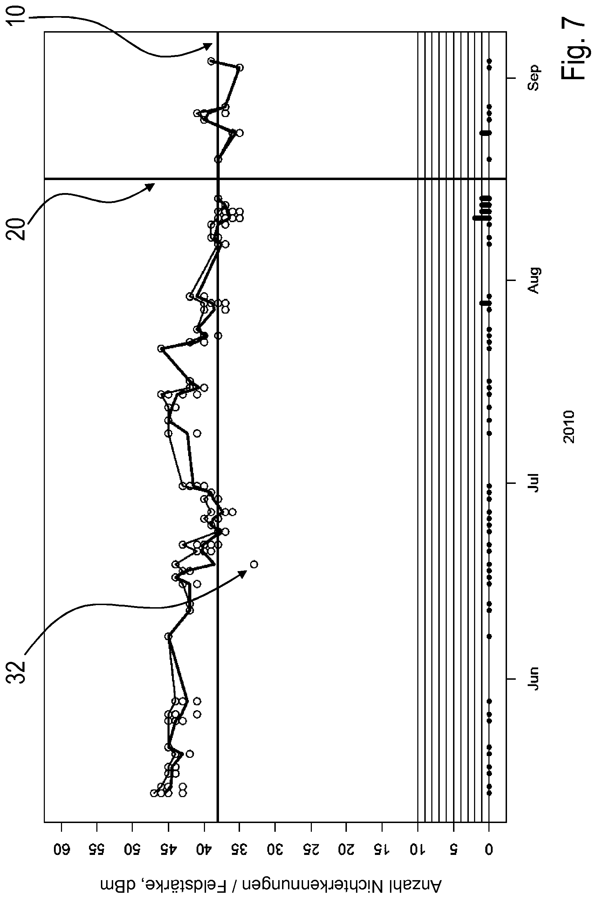

In Fig. 5 ist ein Ausreißerwert 31 einer Empfangssignalstärke sichtbar. Die Abstände des Ausreißerwertes 31 zu einer vorhergehenden und einer nachfolgenden Empfangssignalstärke betragen etwa 10 dBm. Der Ausreißerwert 31 wird bereits mehr als zwei Wochen vor dem Defektzeitpunkt 20 ermittelt, so dass bereits dann eine Signalisierung hätte erfolgen können. Wird der Ausreißerwert 31 in der fortlaufenden Ermittlung von Empfangssignalstärken als zweite Empfangssignalstärke behandelt, dann hat er von einer vorangehend ermittelten ersten Empfangssignalstärke einen Abstand von 10dBm. Umfasst die Auswertung der beiden Empfangssignalstärken eine Differenzbildung und einen Vergleich mit einem Abweichungsschwellwert, und ist der Abweichungsschwellwert auf 5 dBm oder 8 dBm gesetzt, dann wird das Auswerteergebnis zu einer Signalisierung führen. Ein weiterer Ausreißerwert 32 ist in dem Diagramm in der Fig. 7 erkennbar, der in der zweiten Junihälfte auftritt. Von einer am selben Tag ermittelten weiteren Empfangssignalstärke weist dieser Ausreißerwert 32 einen Abstand von deutlich mehr als 10 dBm auf. Auch hier würde ein auf Differenzbildung aufeinander folgend ermittelter Empfangssignalstärken mit vorgegebenem Abweichungsschwellwert von 5 dBm oder 8 dBm zu einer Signalisierung führen. Der Ausreißerwert 32 wurde etwa 2 Monate vor dem Defektzeitpunkt 20 ermittelt. Das bedeutet, die Signalisierung basierend auf das erfindungsgemäße Verfahren würde etwa 2 Monate vor dem tatsächlichen Ausfall der Positionsbestimmungsvorrichtung PV erfolgen.

Bei einer nicht erfindungsgemäßen Ausführungsform des Verfahrens, bei dem bereits das Unterschreiten des Verdachtsschwellwert 10 durch eine der fortlaufend ermittelten Empfangssignalstärken zu einer Signalisierung führt, würde in der Situation aus Fig. 7 die Signalisierung auch bereits zum Zeitpunkt des Auftretens des Ausreißerwertes 32 erfolgen, also in der zweiten Junihälfte. Anders als bei dem vorangehend beschriebenen Vergleich der ersten und der zweiten Empfangssignalstärken mit einem entsprechenden Abweichungsschwellwert von 5 dBm oder 8 dBm, würde aber in der Situation gemäß Fig. 5 die Signalisierung bei einem erstmaligen Unterschreiten des Verdachtsschwellwert 10 nicht erst Anfang August, sondern bereits Ende Juni erfolgen.

Die Empfangssignalstärke-Werte der Positionsbestimmungsvorrichtung PV in Fig. 6 weisen keine einzelnen Ausreißerwerte 31, 32 wie in den anderen beiden Fällen auf. Es sind jedoch zumindest zwei Sprünge 34, 35 deutlich erkennbar, die einige Wochen vor dem Defektzeitpunkt 20 zu verzeichnen sind. Bei einem ersten Sprung 34 fällt der über einen Tag gerechnete Mittelwert der Empfangssignalstärken von einem Tag, an dem die Empfangssignalstärke ermittelt wurden, auf den nächsten um etwa 5 bis 6 dBm. Bei einem zweiten Sprung 35 liegt eine Differenz zwischen einer ersten Empfangssignalstärke und einer zweiten Empfangssignalstärke ebenfalls bei mehr als 5 dBm. Jeder der beiden Sprünge 34, 35 kann für sich genommen eine Signalisierung auslösen. Vorzugsweise erfolgt eine Signalisierung, wenn die Auswertung ergibt, dass die Differenz zwischen einer zweiten Empfangssignalstärke oder einem Mittelwert aus mehreren zweiten Empfangssignalstärken und einer ersten Empfangssignalstärke einen Abweichungsschwellwert von 5 dBm überschreitet. Alternativ kann die Signalisierung erst dann durchgeführt werden, wenn nach dem ersten Sprung 34 auch der zweite Sprung 35 registriert wurde. Eine solche Signalisierung erfolgt im Allgemeinen dann, wenn die Auswertung ergibt, dass die besagte Differenz den Abweichungsschwellwert mehrmals überschreitet. Die in der Fig. 6 eingezeichnete vertikale gestrichelte Linie 40 kennzeichnet einen Reparaturzeitpunkt 40, an dem die Positionsbestimmungsvorrichtung PV repariert bzw. neu eingestellt oder kalibriert wurde. Die nach diesem Zeitpunkt ermittelten Empfangssignalstärken liegen wieder deutlich oberhalb des Verdachtsschwellwertes 10 von 38 dBm.

Wie anhand der vorangehenden Beispiele verdeutlicht, hängt die Entscheidung, ob eine Signalisierung erfolgt, und wenn ja, wann die Signalisierung erfolgt von der Vorschrift ab, die bei der Auswertung und Entscheidung angewendet wird. Der Zeitpunkt, an dem eine Signalisierung erfolgt, lässt sich aus den Fig. 5 bis 7 am einfachsten für die Vorschrift ablesen, dass die erste Empfangssignalstärke den gewählten oder errechneten Verdachtsschwellwert 10 von 38 dBm unterschreitet. In diesem Fall würde allen drei Situationen (gemäß Fig. 5, 6 und 7) die Signalisierung in der zweiten Juni-Hälfte erfolgen) - in der Situation nach Fig. 7 einige Tage früher, als in den Situationen nach Fig. 5 oder Fig. 6.

### Bezugszeichenliste:

- AM: Auswertungsmittel
- CP: Computerprogrammprodukt
- EmM: Ermittlungsmittel
- EsM: Entscheidungsmittel
- FM: Funkmittel
- GE: GNSS-Empfänger
- PV: Positionsbestimmungsvorrichtung
- PZ: Prozessor
- SM1: erstes Signalmittel
- SM2: zweites Signalmittel
- SP: Speicher
- SV: Signalisierungsvorrichtung
- ZE: Zentraleinrichtung

- 6: Maximalwerte der Empfangssignalstärken
- 8: Durchschnittswerte der Empfangssignalstärken
- 10: Verdachtsschwellwert
- 20: Defektzeitpunkt
- 31: Ausreißerwert
- 32: weiterer Ausreißerwert
- 34: erster Sprung in der Empfangssignalstärke
- 35: zweiter Sprung in der Empfangssignalstärke
- 40: Reparaturzeitpunkt

## Patentansprüche

1. Verfahren zur Signalisierung einer drohenden mangelnden Betriebsfähigkeit einer mit einem GNSS-Empfänger (GE) versehenen Positionsbestimmungsvorrichtung (PV), wobei das Verfahren folgende Verfahrensschritte umfasst:
- Ermitteln einer ersten Empfangssignalstärke eines vom GNSS-Empfänger (GE) empfangenen GNSS-Signals,
- Ermitteln wenigstens einer zweiten Empfangssignalstärke des vom GNSS-Empfänger (GE) empfangenen GNSS-Signals,
- Auswerten der ersten Empfangssignalstärke und wenigstens der zweiten Empfangssignalstärke und Erzeugen eines Ergebnisses des Auswertens,
- Ermitteln einer Position der Positionsbestimmungsvorrichtung (PV) mittels des vom GNSS-Empfänger (GE) empfangenen GNSS-Signals,
- Vergleichen der ermittelten Position mit einem in einem Speicher hinterlegten Satz an Schwachempfangsgebieten, in denen Störungen und/oder ein Fehlen des GNSS-Empfangs bekannt sind, und
- Entscheiden über das Auslösen einer Signalisierung in Abhängigkeit vom Ergebnis des Auswertens und des Positionsvergleichs,
wobei die erste Empfangssignalstärke des vom GNSS-Empfänger (GE) empfangenen GNSS-Signals zu einem ersten Empfangszeitpunkt ermittelt wird oder über mehrere erste Empfangszeitpunkte oder über einen ersten Empfangszeitbereich gemittelt wird, und wobei die zweite Empfangssignalstärke des vom GNSS-Empfänger (GE) empfangenen GNSS-Signals zu einem zweiten Empfangszeitpunkt ermittelt wird oder über mehrere zweite Empfangszeitpunkte oder über einen zweiten Empfangszeitbereich gemittelt wird,
wobei das Auswerten der ersten Empfangssignalstärke und der zweiten Empfangssignalstärke ein Vergleichen der ersten Empfangssignalstärke mit der zweiten Empfangssignalstärke umfasst, wobei das Auslösen der Signalisierung erfolgt, wenn die zweite Empfangssignalstärke von der ersten Empfangssignalstärke um einen vorgegebenen Abweichungsschwellwert abweicht und die ermittelte Position nicht mit einem Schwachempfangsgebiet korreliert.

2. Verfahren nach Anspruch 1, wobei die ermittelte erste Empfangssignalstärke und die ermittelte zweite Empfangssignalstärke zu einer Folge von Empfangssignalstärken des vom GNSS-Empfänger (GE) empfangenen GNSS-Signals gehören, welche fortlaufend ermittelt werden.

3. Verfahren nach einem der vorangehenden Ansprüche, wobei in Abhängigkeit vom Ergebnis des Auswertens auch dann entschieden wird, dass eine Signalisierung ausgelöst wird, wenn die Positionsbestimmungsvorrichtung (PV) mittels des vom GNSS-Empfänger (GE) empfangenen GNSS-Signals bei der ersten Empfangssignalstärke und bei der zweiten Empfangssignalstärke jeweils eine Positionsbestimmung durchführen kann.

4. Signalisierungssystem zur Signalisierung einer drohenden mangelnden Betriebsfähigkeit einer mit einem GNSS-Empfänger (GE) versehenen Positionsbestimmungsvorrichtung (PV), aufweisend:
- die Positionsbestimmungsvorrichtung (PV) mit dem GNSS-Empfänger (GE),
- ein Ermittlungsmittel (EmM), welches ausgebildet ist, eine erste Empfangssignalstärke eines vom GNSS-Empfänger (GE) empfangenen GNSS-Signals zu einem ersten Empfangszeitpunkt oder über mehrere erste Empfangszeitpunkte oder über einen ersten Empfangszeitbereich gemittelt und wenigstens eine zweite Empfangssignalstärke des vom GNSS-Empfänger (GE) empfangenen GNSS-Signals zu einem zweiten Empfangszeitpunkt oder über mehrere zweite Empfangszeitpunkte oder über einen zweiten Empfangszeitbereich gemittelt zu ermitteln,
- ein Auswertungsmittel (AM), welches ausgebildet ist, die erste Empfangssignalstärke und wenigstens die zweite Empfangssignalstärke auszuwerten und ein Auswerteergebnis zu erzeugen, wobei das Auswerten ein Vergleichen der ersten Empfangssignalstärke mit der zweiten Empfangssignalstärke umfasst,
- ein Mittel, welches ausgebildet ist, eine Position der Positionsbestimmungsvorrichtung (PV) mittels des vom GNSS-Empfänger (GE) empfangenen GNSS-Signals zu ermitteln,
- ein Mittel, das ausgebildet ist, die ermittelte Position mit einem in einem Speicher hinterlegten Satz an Schwachempfangsgebieten, in denen Störungen und/oder ein Fehlen des GNSS-Empfangs bekannt sind, zu vergleichen, und
- ein Entscheidungsmittel (EsM), welches ausgebildet ist, in Abhängigkeit vom Auswerteergebnis und vom Ergebnis des Positionsvergleichs über das Auslösen einer Signalisierung zu entscheiden, derart, dass das Auslösen der Signalisierung erfolgt, wenn die zweite Empfangssignalstärke von der ersten Empfangssignalstärke um einen vorgegebenen Abweichungsschwellwert abweicht und die ermittelte Position nicht mit einem Schwachempfangsgebiet korreliert.

5. Signalisierungssystem nach Anspruch 4, in welchem das Auswertungsmittel (AM) und/oder das Entscheidungsmittel (EsM) in der Positionsbestimmungsvorrichtung (PV) angeordnet sind/ist.

6. Signalisierungssystem nach Anspruch 4, in welchem die Positionsbestimmungsvorrichtung (PV) das Ermittlungsmittel (EmM) und eine Funkvorrichtung (dFV) aufweist, welche ausgebildet ist, die erste Empfangssignalstärke und/oder die zweite Empfangssignalstärke per Funk an eine Zentraleinrichtung (ZE) zu übermitteln, wobei die Zentraleinrichtung (ZE) das Auswertungsmittel (AM) und das Entscheidungsmittel (EsM) aufweist.

7. Signalisierungssystem nach einem der Ansprüche 4 bis 6, in welchem die Positionsbestimmungsvorrichtung (PV) eine Signalisierungsvorrichtung (SV) aufweist und ausgebildet ist, bei positiver Entscheidung des Entscheidungsmittels (EsM) über das Auslösen der Signalisierung, die Signalisierung auszulösen.

8. Gebührenerhebungssystem mit einem Signalisierungssystem gemäß einem der Ansprüche 4 bis 7 und einer Gebührenberechnungseinrichtung, welche ausgebildet ist, für das Befahren von Verkehrswegen in Abhängigkeit von Positionen, welche mittels der Positionsbestimmungsvorrichtung (PV) anhand von durch den GNSS-Empfänger (GE) empfangenen Empfangssignalen bestimmt werden, eine zu zahlende Gebühr zu errechnen und einem der Positionsbestimmungsvorrichtung (PV) zugeordneten Fahrzeughalter in Rechnung zu stellen.

9. Positionsbestimmungsvorrichtung (PV) mit einem GNSS-Empfänger (GE), einem Ermittlungsmittel (EmM), welches ausgebildet ist, eine erste Empfangssignalstärke eines vom GNSS-Empfänger (GE) empfangenen GNSS-Signals zu einem ersten Empfangszeitpunkt zu ermitteln oder über mehrere erste Empfangszeitpunkte oder über einen ersten Empfangszeitbereich zu mitteln und eine wenigstens zweite Empfangssignalstärke des vom GNSS-Empfänger (GE) empfangenen GNSS-Signals zu einem zweiten Empfangszeitpunkt zu ermitteln oder über mehrere zweite Empfangszeitpunkte oder über einen zweiten Empfangszeitbereich zu mitteln, einem Auswertungsmittel (AM), welches ausgebildet ist, die erste Empfangssignalstärke und die zweite Empfangssignalstärke auszuwerten und ein Auswerteergebnis zu erzeugen, wobei das Auswerten ein Vergleichen der ersten Empfangssignalstärke mit der zweiten Empfangssignalstärke umfasst, ein Mittel, welches ausgebildet ist, eine Position der Positionsbestimmungsvorrichtung (PV) mittels des vom GNSS-Empfänger (GE) empfangenen GNSS-Signals zu ermitteln, ein Mittel, das ausgebildet ist, die ermittelte Position mit einem in einem Speicher hinterlegten Satz an Schwachempfangsgebieten, in denen Störungen und/oder ein Fehlen des GNSS-Empfangs bekannt sind, zu vergleichen, und einem Entscheidungsmittel (EsM), welches ausgebildet ist, in Abhängigkeit vom Auswerteergebnis und vom Ergebnis des Positionsvergleichs eine Signalisierung auszulösen, wenn die zweite Empfangssignalstärke von der ersten Empfangssignalstärke um einen vorgegebenen Abweichungsschwellwert abweicht und die ermittelte Position nicht mit einem Schwachempfangsgebiet korreliert.

10. Computerprogrammprodukt (CP) zur Signalisierung einer drohenden mangelnden Betriebsfähigkeit einer mit einem GNSS-Empfänger (GE) versehenen Positionsbestimmungsvorrichtung (PV), welches Befehle enthält, die bei der Ausführung des Programms durch einen Computer diesen veranlassen, die folgenden Schritte auszuführen:
- Auswerten einer ersten, zu einem ersten Empfangszeitpunkt ermittelten oder über mehrere erste Empfangszeitpunkte oder über einen ersten Empfangszeitbereich gemittelten Empfangssignalstärke eines vom GNSS-Empfänger (GE) empfangenen GNSS-Signals und einer zweiten, zu einem zweiten Empfangszeitpunkt ermittelten oder über mehrere zweite Empfangszeitpunkte oder über einen zweiten Empfangszeitbereich gemittelten Empfangssignalstärke des vom GNSS-Empfänger (GE) empfangenen GNSS-Signals,
- Vergleichen einer mittels des vom GNSS-Empfänger (GE) empfangenen GNSS-Signals ermittelten Position der Positionsbestimmungsvorrichtung (PV) mit einem in einem Speicher hinterlegten Satz an Schwachempfangsgebieten, in denen Störungen und/oder ein Fehlen des GNSS-Empfangs bekannt sind, und
- Entscheiden, dass eine Signalisierung ausgelöst wird, in Abhängigkeit vom Ergebnis des Auswertens und des Positionsvergleichs, wobei das Auswerten der ersten Empfangssignalstärke und der zweiten Empfangssignalstärke ein Vergleichen der ersten Empfangssignalstärke mit der zweiten Empfangssignalstärke umfasst, wobei das Auslösen der Signalisierung erfolgt, wenn die zweite Empfangssignalstärke von der ersten Empfangssignalstärke um einen vorgegebenen Abweichungsschwellwert abweicht und die ermittelte Position nicht mit einem Schwachempfangsgebiet korreliert.

## Claims

1. A method for signaling an impending lack of operability of a position determination device (PV) equipped with a GNSS receiver (GE), wherein the method comprises following method steps:
- determining a first receive signal strength of a GNSS signal received by the GNSS receiver (GE),
- determining at least one second receive signal strength of the GNSS signal received by the GNSS receiver (GE),
- evaluating the first receive signal strength and at least the second receive signal strength and generating a result of the evaluation,
- determining a position of the position determination device (PV) by means of the GNSS signal received from the GNSS receiver (GE),
- comparing the determined position with a set of weak reception areas stored in a memory, where interferences and/or an absence of GNSS reception are known, and
- deciding on the triggering of a signaling depending on the result of the evaluation and the position comparison,
wherein the first receive signal strength of the GNSS signal received by the GNSS receiver (GE) is determined at a first reception time or averaged over a plurality of first reception times or over a first reception time range, and wherein the second receive signal strength of the GNSS signal received by the GNSS receiver (GE) is determined at a second reception time or averaged over a plurality of second reception times or over a second reception time range,
wherein the evaluation of the first receive signal strength and the second receive signal strength comprises a comparison of the first receive signal strength with the second receive signal strength, wherein the triggering of the signaling takes place when the second receive signal strength deviates from the first receive signal strength by a predetermined deviation threshold value and the determined position does not correlate with a weak reception area.

2. A method according to claim 1, wherein the determined first received signal strength and the determined second receive signal strength belong to a sequence of receive signal strengths of GNSS signal received by the GNSS receiver (GE), which are determined continuously.

3. A method according to any one of the preceding claims, wherein, depending on the result of the evaluation, it is also decided that a signaling is triggered if the position determination device (PV) can perform respectively a position determination at the first receive signal strength and at the second receive signal strength by means of the GNSS signal received from the GNSS receiver (GE).

4. A signaling system for signaling an impending lack of operability of a position determination device (PV) equipped with a GNSS receiver (GE), comprising:
- the position determination device (PV) with the GNSS receiver (GE),
- a determination means (EmM), which is designed to determine a first receive signal strength of a GNSS signal received from the GNSS receiver (GE) at a first reception time or to average over a plurality of first reception times or over a first reception time range and at least a second receive signal strength of the GNSS signal received from the GNSS receiver (GE) at a second reception time or to average over a plurality of second reception times or over a second reception time range,
- an evaluation means (AM), which is designed to evaluate the first receive signal strength and at least the second receive signal strength and to generate an evaluation result, wherein the evaluation comprises a comparison of the first receive signal strength with the second receive signal strength,
- a means which is designed to determine a position of the position determination device (PV) by means of the GNSS signal received from the GNSS receiver (GE),
- a means which is designed to compare the determined position with a set of weak reception areas stored in a memory, where interferences and / or an absence of GNSS reception are known, and
- a decision means (EsM), which is designed to decide depending on the evaluation result and the result of the position comparison on the triggering of the signaling, such that the triggering of the signaling takes place when the second receive signal strength deviates from the first receive signal strength by a predetermined deviation threshold value and the determined position does not correlate with a weak reception area.

5. A signaling system according to claim 4, wherein the evaluation means (AM) and / or the decision means (EsM) are / is arranged in the position determination device (PV).

6. A signaling system according to claim 4, wherein the position determination device (PV) comprises the determination means (EmM) and a radio device (dFV), which is designed to transmit the first receive signal strength and / or the second receive signal strength by radio to a central device (ZE), wherein the central device (ZE) comprises the evaluation means (AM) and the decision means (EsM).

7. A signaling system according to any one of claims 4 to 6, wherein the position determination device (PV) comprises a signaling device (SV) and is designed, in case of positive decision of the decision means (EsM) on the triggering of the signaling, to trigger the signaling.

8. A fee collection system with a signaling system according to any one of claims 4 to 7 and a fee calculation device which is designed to calculate a fee to be paid for driving on traffic routes depending on positions determined by means of the position determination device (PV) on the basis of reception signals received by the GNSS receiver (GE) and to invoice it to a vehicle owner assigned to the position determination (PV).

9. A position determination device (PV) with a GNSS receiver (GE), a detection means (EmM), which is designed to determine a first receive signal strength of a GNSS signal received by the GNSS receiver (GE) at a first reception time or to average over a plurality of first reception times or over a first reception time range and to determine at least a second receive signal strength of the GNSS signal received by the GNSS receiver (GE) at a second reception time or to average over a plurality of second reception times or over a second reception time range, an evaluation means which is designed to evaluate the first receive signal strength and the second receive signal strength and to generate an evaluation result, wherein the evaluation comprises a comparison of the first receive signal strength with the second receive signal strength, a means which is designed to determine a position of the position determination device (PV) by means of the GNSS receiver (GE) received GNSS signal, a means which is designed to compare the determined position with a set of weak reception areas stored in a memory, where interferences and / or an absence of GNSS reception are known, and a decision means (EsM), which is designed to trigger a signaling depending on the evaluation result and the result of the position comparison, if the second receive signal strength deviates from the first receive signal strength by a predetermined deviation threshold value and the determined position does not correlate with a weak reception area.

10. A computer program product (CP) for signaling impending lack of operability of a position determination device (PV) equipped with a GNSS receiver (GE), which contains orders, which causes at execution of the program by a computer it to perform the following steps:
- evaluating a first receive signal strength of a GNSS signal received by the GNSS receiver (GE), the first receive signal strength being determined at a first reception time or averaged over a plurality of first reception times or over a first reception time range, and a second receive signal strength of the GNSS signal received by the GNSS receiver (GE), the second receive signal strength being determined at a second reception time or averaged over a plurality of second reception times or over a second reception time range;
- comparing a position of the position determination device (PV) determined by means of the GNSS signal received by the GNSS receiver (GE) with a set of weak reception areas stored in a memory, where interferences and/or an absence of GNSS reception are known, and
- deciding that signaling is triggered, depending on the result of the evaluation and position comparison, wherein the evaluation of the first receive signal strength and the second receive signal strength comprises a comparison of the first receive signal strength with the second receive signal strength, wherein the triggering of the signaling is carried out, if the second receive signal strength deviates from the first receive signal strength by a predetermined deviation threshold value and the determined position does not correlate with a weak reception area.

## Revendications

1. Un procédé de signalisation d'un défaut imminent d'opérabilité d'un dispositif de détermination de position (PV) équipé d'un récepteur GNSS (GE), le procédé comprenant les étapes suivantes :
- déterminer une première intensité du signal de réception d'un signal GNSS reçu par le récepteur GNSS (GE),
- déterminer au moins une seconde intensité du signal de réception du signal GNSS reçu par le récepteur GNSS (GE),
- évaluer la première intensité du signal de réception et au moins la seconde intensité du signal de réception et générer un résultat de l'évaluation,
- déterminer la position du dispositif de détermination de position (PV) au moyen du signal GNSS reçu du récepteur GNSS (GE),
- comparer la position déterminée avec un ensemble de zones de faible réception stockées dans une mémoire où des interférences et/ou une absence de réception GNSS sont connues, et
- décider du déclenchement d'une signalisation en fonction du résultat de l'évaluation et de la comparaison de position,
dans lequel la première intensité du signal de réception du signal GNSS reçu par le récepteur GNSS (GE) est déterminée à un premier temps de réception ou moyennée sur une pluralité de premiers temps de réception ou sur une première plage de temps de réception, et dans lequel la seconde intensité du signal de réception du signal GNSS reçu par le récepteur GNSS (GE) est déterminée à un second temps de réception ou moyennée sur une pluralité de seconds temps de réception ou sur une seconde plage de temps de réception,
dans lequel l'évaluation de la première intensité du signal de réception et de la seconde intensité du signal de réception comprend une comparaison de la première intensité du signal de réception avec la seconde intensité du signal de réception, dans lequel le déclenchement de la signalisation a lieu lorsque la seconde intensité du signal de réception dévie de la première intensité du signal de réception par une valeur de seuil de déviation prédéterminée et la position déterminée n'est pas corrélée à une zone de faible réception.

2. Le procédé selon la revendication 1, dans lequel la première intensité déterminée du signal de réception et la seconde intensité déterminée du signal de réception appartiennent à une séquence des intensités du signal de réception du signal GNSS reçu par le récepteur GNSS (GE), qui sont déterminées en continu.

3. Le procédé selon l'une quelconque des revendications précédentes, dans lequel en fonction du résultat de l'évaluation, il est décidé également qu'une signalisation est déclenchée si le dispositif de détermination de position (PV) peut effectuer au moyen du signal GNSS reçu du récepteur GNSS (GE) une détermination de position auprès la première intensité du signal de réception et à la seconde intensité du signal de réception respectivement.

4. Un système de signalisation pour signalisation d'un défaut imminent d'opérabilité d'un dispositif de détermination de position (PV) équipé d'un récepteur GNSS (GE), comprenant:
- le dispositif de détermination de position (PV) avec le récepteur GNSS (GE),
- un moyen de détermination (EmM), qui est conçu pour déterminer une première intensité de signal de réception d'un signal GNSS reçu du récepteur GNSS (GE) à un premier temps de réception ou moyennée sur une pluralité de premiers temps de réception ou sur une première plage de temps de réception et au moins une seconde intensité de signal de réception du signal GNSS reçu du récepteur GNSS (GE) à un second temps de réception ou moyennée sur une pluralité de seconds temps de réception ou sur une seconde plage de temps de réception,
- un moyen d'évaluation (AM), qui est conçu pour évaluer la première intensité du signal de réception et au moins la seconde intensité du signal de réception et pour générer un résultat d'évaluation, dans lequel l'évaluation comprend une comparaison de la première intensité du signal de réception avec la seconde intensité du signal de réception,
- un moyen qui est conçu pour déterminer la position du dispositif de détermination de position (PV) au moyen du signal GNSS reçu du récepteur GNSS (GE),
- un moyen qui est conçu pour comparer la position déterminée avec un ensemble de zones de faible réception déposées dans une mémoire où une interférence et/ou une absence de réception GNSS sont connues, et
- un moyen de décision (EsM), qui est conçu pour décider en fonction du résultat de l'évaluation et du résultat de la comparaison de position sur le déclenchement d'une signalisation de sorte que le déclenchement de la signalisation ait lieu lorsque la seconde intensité du signal de réception dévie de la première intensité du signal de réception par une valeur de seuil prédéterminée et la position déterminée n'est pas corrélée avec une zone de faible réception.

5. Un système de signalisation selon la revendication 4, dans lequel les moyens d'évaluation (AM) et/ou les moyens de décision (EsM) sont/est disposés dans le dispositif de détermination de position (PV).

6. Le système de signalisation selon la revendication 4, dans lequel le dispositif de détermination de position (PV) comprend les moyens de détermination (EmM) et un dispositif radio (dFV), qui est conçu pour transmettre la première intensité du signal de réception et/ou la seconde intensité du signal de réception par radio à un dispositif central (ZE), dans lequel le dispositif central (ZE) a les moyens d'évaluation (AM) et les moyens de décision (EsM).

7. Le système de signalisation selon l'une quelconque des revendications 4 à 6, dans lequel le dispositif de détermination de position (PV) a un dispositif de signalisation (SV) et est conçu, en cas de décision positive des moyens de décision (EsM) sur le déclenchement de la signalisation, pour déclencher la signalisation.

8. Un système de tarification avec un système de signalisation selon l'une quelconque des revendications 4 à 7 et un dispositif de calcul de redevances qui est conçu pour calculer une redevance à payer pour la conduite sur les voies de circulation en fonction des positions déterminées au moyen du dispositif de détermination de position (PV) sur la base des signaux reçus par le récepteur GNSS (GE) et pour facturer à un propriétaire du véhicule associé au dispositif de détermination de position (PV).

9. Un dispositif de détermination de position (PV) avec un récepteur GNSS (GE), un moyen de détection (EmM), qui est conçu pour déterminer une première intensité d'un signal de réception d'un signal GNSS reçu par le récepteur GNSS (GE) à un premier temps de réception ou moyenner sur une pluralité de premiers temps de réception ou sur une première plage de temps de réception et déterminer au moins une seconde intensité du signal de réception du signal GNSS reçu par le récepteur GNSS (GE) à un second temps de réception ou moyenner sur une pluralité de seconds temps de réception ou sur une seconde plage de temps de réception, un moyen d'évaluation (AM), qui est conçu pour évaluer la première intensité du signal de réception et la seconde intensité du signal de réception et pour générer un résultat d'évaluation, dans lequel l'évaluation comprend une comparaison de la première intensité du signal de réception avec la seconde intensité du signal de réception, un moyen, qui est conçu pour déterminer une position du dispositif de détermination de position (PV) au moyen du signal GNSS reçu par le récepteur GNSS (GE), un moyen, qui est conçu pour comparer la position déterminée avec un ensemble de zones de faible réception déposées dans une mémoire où des interférences et / ou une absence de réception GNSS sont connues, et un moyen de décision (EsM), qui est conçu pour déclencher une signalisation en fonction du résultat de l'évaluation et du résultat de la comparaison de position, lorsque la seconde intensité du signal dévie de la première intensité du signal par une valeur de seuil de déviation prédéterminée et la position déterminée n'est pas corrélée à une zone de faible réception.

10. Un produit de programme d'ordinateur (CP) pour signaler un défaut imminent d'opérabilité d'un dispositif de détermination de position (PV) équipé d'un récepteur GNSS (GE), qui contient des commandes qui provoquent lors de l'exécution du programme par un ordinateur celui-ci à performer au moins les étapes suivantes :
- évaluer une première intensité du signal de réception d'un signal GNSS reçu par le récepteur GNSS (GE) déterminée à un premier temps de réception ou moyennée sur une pluralité de premiers temps de réception ou sur une première plage de temps de réception et une seconde intensité du signal de réception d'un signal GNSS reçu par le récepteur GNSS (GE) déterminée à un second temps de réception ou moyennée sur une pluralité de seconds temps de réception ou sur une seconde plage de temps de réception;
- comparer une position du dispositif de détermination de position (PV) déterminée au moyen du signal GNSS reçu par le récepteur GNSS (GE) avec un ensemble de zones de faible réception stockées dans une mémoire où des interférences et/ou une absence de réception GNSS sont connues, et
- décider que la signalisation est déclenchée, en fonction du résultat de l'évaluation et de la comparaison de position, dans lequel l'évaluation de la première intensité du signal de réception et de la seconde intensité du signal de réception comprend une comparaison de la première intensité du signal de réception avec la seconde intensité du signal de réception, dans lequel le déclenchement de la signalisation est effectué si la seconde intensité du signal de réception dévie de la première intensité du signal de réception par une valeur de seuil de déviation prédéterminée et la position déterminée n'est pas corrélée avec une zone de faible réception.
